# EUROPÄISCHE PATENTSCHRIFT

(11) **EP 2 247 061 B1**
(45) Veröffentlichungstag und Bekanntmachung des Hinweises auf die Patenterteilung: **07.12.2011**
(21) Anmeldenummer: 09005900.7
(22) Anmeldetag: 28.04.2009
(51) Int. Cl.: H04L 29/06, H04N 7/173

(54) **Verfahren und Vorrichtung zum berechtigungsabhängigen Zugriff auf Multimediainhalte sowie die Vorrichtung umfassendes System**
Method and device for authorisation-dependent access to multimedia content and system comprising the device
Procédé et dispositif destinés à l'accès en fonction de la justification à des contenus multimédias et système comprenant ledit dispositif

(43) Veröffentlichungstag der Anmeldung: 03.11.2010
(73) Patentinhaber: Nokia Siemens Networks OY, 02610 Espoo (FI)
(72) Erfinder: Jerichow, Anja, 81735 München (DE); Guenther, Christian, 85579 Neubiberg (DE)
(74) Vertreter: Bruglachner, Thomas E.

(56) Entgegenhaltungen:
- EP-A- 2 007 101
- CAGENIUS T., FASBENDER A. ET AL: "Evolving the TV experience: Anytime, anywhere, any device" ERICSSON REVIEW, Bd. 2006, Nr. 3, 2006, XP002549013

## Beschreibung

Die Erfindung betrifft ein Verfahren und eine Vorrichtung zum berechtigungsabhängigen Zugriff auf Multimediainhalte sowie ein die Vorrichtung umfassendes System.

Fernseh- und Rundfunkprogramme werden zunehmend über eine Mehrzahl von Verteilwegen angeboten. So findet sich die Bereitstellung derartiger Programmangebote über terrestrisches Antennensignal, aber auch über Kabelnetze, Satellitensysteme, das Internet und Kommunikationsnetze, wie insbesondere Mobilfunknetze. Über diese neuen Verteilwege werden allgemeiner Multimediadienste unterstützt, die neben Fernseh- und Audioprogrammen, beispielsweise auch Video auf Anforderung, Audio auf Anforderung, Spiele, Texte, Bilder, Daten und Internetzugriff umfassen können.

So erfolgt beispielsweise bei IPTV (Internet Protokoll Fernsehen) die digitale Übertragung von breitbandigen Anwendungen, wie Fernsehprogrammen und Filmen, über ein digitales Datennetz. Hierzu wird das auch dem Internet zugrunde liegende Internet Protocol (IP) verwendet. Typischerweise wird beim IPTV von einem Telekommunikations-Anbieter einem bestimmten Nutzerkreis, den Abonnenten oder Teilnehmern, ein Programmangebot mit definierter Qualität über ein Breitbandnetz zur Verfügung gestellt. IPTV benötigt i. a. aus technischen Gründen ein geeignetes und vom IPTV Anbieter zugelassenes Endgerät beim Teilnehmer. Das Endgerät empfängt Datenströme über eine Internetanbindung, z.B. eine DSL basierte Anbindung, es teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere, beispielsweise Set Top Boxen (STB), Fernsehgeräte (TV), Personal Computer (PC) und Mobilfunkgeräte zur Verfügung. Zur Bereitstellung der ein jeweiliges IPTV Angebot betreffenden Multimediadienste sind seitens des Anbieters u. a. Komponenten zur Steuerung, Lastverteilung und Zugangskontrolle, zur Einspeisung von Fernsehprogrammen (TV headend) in das Breitbandnetz, zur Bereitstellung von Video/Audio Inhalten auf Abruf (VoD Server), zur Aufzeichnung von Inhalten (PVRs), zur Übertragung per Streaming und/oder Download, sowie zur Verschlüsselung der zu übertragenden Inhalte vorhanden.

Neben auf einem Festnetz basierten IPTV Netzlösungen gibt es insbesondere für Mobilfunknetze geeignete Netzlösungen für Mobilfernsehen, die typischerweise zum Beispiel von Mobilfunknetzbetreibern angeboten werden. Derartige Netzlösungen benötigen anbieterseitig ähnliche Komponenten, wie bereits vorstehend erwähnt, verwenden jedoch bedingt durch andere Technologie abweichende Konzepte und Standards. Insbesondere sind beispielsweise die Kodierung der Nutzsignale und die Funktionalität der Endgeräte (z.B. Displaygröße, lokale Verarbeitungsleistung, lokaler Speicher, Übertragungsbandbreite) verschieden von den für ein Festnetz eingesetzten IPTV Lösungen.

Durch die Mehrzahl der Verteilwege und Netzlösungen zur Bereitstellung von Multimediainhalten wird es möglich, dass ein Nutzer oder Teilnehmer auf einen ihn interessierenden Inhalt, beispielsweise auf einen auf Anforderung bereitgestellten Spielfilm oder auf ein Fernsehprogramm, von zuhause, am Arbeitsplatz, bei Bekannten oder insbesondere von unterwegs zugreift. Hierzu kann sich der Nutzer oder Teilnehmer unterschiedlicher Endgeräte bedienen und/oder unterschiedliche Netzlösungen nutzen.

Ein auf Anforderung bereitgestellter Spielfilm oder ein Fernsehprogramm kann klassifiziert sein z. B. hinsichtlich seiner Eignung für Kinder und Heranwachsende. Insbesondere kann ein bereitgestellter Multimediainhalt beispielsweise als jugendfrei, als geeignet ab einem gewissen Lebensalter oder als nicht jugendfrei klassifiziert sein. Ebenso können andere Klassifizierungen existieren. Auch können Programmkanäle und Programmkategorien zur Klassifizierung herangezogen werden. Die genannten Netzlösungen können unterschiedliche Arten einer elterlichen Zugriffssteuerung auf klassifizierte Inhalte unterstützen. Eine solche Zugriffssteuerung besteht i. a. zumindest in der Festlegbarkeit von Zugriffsberechtigungen durch die Eltern und die Nachweisbarkeit ausreichender Zugriffsberechtigung auf klassifizierte Inhalte durch die Kinder bei Anforderung von bzw. Zugriff auf klassifizierte Inhalte, wobei ein Nachweis ausreichender Zugriffsberechtigung i. a. durch Eingabe eines Passworts erfolgen kann. Neben diesen Grundfunktionen elterlicher Zugriffssteuerung können die genannten Netzlösungen ebenso unterschiedliche weitere Leistungsmerkmale der elterlichen Zugriffssteuerung anbieten. Insbesondere Programminformationssysteme, wie Electronic Program Guide (EPG) und Electronic Service Guide (ESG), können hierfür angepasst sein. Auch gibt es unterschiedliche Vorgaben durch nationale Gesetze und länderspezifische Regulierungen hinsichtlich der elterlichen Zugriffssteuerung in den genannten Netzlösungen. Ferner existieren verschiedene Standardisierungen (OMA, DVB), gemäß denen jeweils festgelegt ist, wie ein Nutzer einer Netzlösung über klassifizierte Inhalte zu informieren ist bzw. sich diesbezüglich unterrichten kann. Die genannten Netzlösungen zur Bereitstellung von Multimediainhalten können jedoch auch spezifische, von solchen Standards abweichende Funktionalität hinsichtlich der elterlichen Zugriffssteuerung aufweisen.

Hierbei ist es von Nachteil, dass Funktionen elterlicher Zugriffssteuerung auf eine Netzlösung beschränkt sind und nicht über mehrere unterschiedliche Netzlösungen hinweg und in geräteunabhängiger Weise verfügbar sind. Hat beispielsweise eine Familie mit Kindern neben einer Mehrzahl von zuhause befindlichen, über DSL, Kabel oder einen anderen. Festnetzzugang angebundenen Fernsehgeräten und /oder set Top Boxen auch mobile Endgeräte einer der genannten Netzlösungen für, die Kinder, so müssen sowohl die Eltern als auch die Kinder mindestens zwei unterschiedliche Lösungen elterlicher Zugriffssteuerung verwalten und/oder bedienen. Wird ein Inhalt, insbesondere ein Fernsehprogramm, ein auf Anforderung bereitgestelltes Video, ein Fernsehkanal oder eine Programmkategorie sowohl über die Festnetzlösung als auch über die Mobilnetzlösung angeboten, muss er ggf. durch die Eltern in beiden Lösungen zur Bereitstellung von Multimediainhalten für den Zugriff durch die Kinder separat gesperrt oder freigegeben werden. Insbesondere erfordert ein im Rahmen eines einzigen Zugriffs auf einen klassifizierten Inhalt erfolgender Wechsel zwischen einem Endgerät der Mobilfunklösung und einem Endgerät der Festnetzlösung einen für die jeweilige Netzlösung spezifischen Berechtigungsnachweis für den fortgesetzten Zugriff auf den klassifizierten Inhalt. Auch ist ein elterlicher Zugriff auf den Status eines von den Kindern benutzten Endgeräts der Festnetzlösung nicht über ein Endgerät der Mobilfunknetzlösung möglich, und umgekehrt ist ein elterlicher Zugriff auf den Status eines von den Kindern benutzten Endgeräts der Mobilfunknetzlösung nicht über ein Endgerät der Festnetzlösung möglich.

Der Wechsel zwischen verschiedenen Endgeräten beim Zugriff auf Fernseh und Rundfunkprogramme ist aus dem Stand der Technik bekannt. So offenbart bespielsweise das Dokument Cagenius T. et al: "Evolving the TV experience: Anytime, anywhere, any device", Ericsson Review No. 3, 2006, einen benutzergesteuerten Endgerätewechsel zwischen einem stationären Fernsehgerät und einem Mobiltelefon auf Basis einer IMS-gestützten IPTV-Architektur. Auf die Erfordernis sowie die inhalte- und gerätewechselabhängige Ausgestaltung von Berechtigungsprüfungen wird in diesem Dokument jedoch nicht eingegangen.

Der Erfindung liegt daher die **Aufgabe** zugrunde, die Zugriffssteuerung im Hinblick auf den Einsatz in mehr als einer Netzlösung zur Bereitstellung von Multimediainhalten zu verbessern, so dass geräteunabhängige Verfügbarkeit, einfache Funktionalität und leichte Bedienbarkeit der Zugriffssteuerung erreicht werden.

Die Aufgabe wird hinsichtlich des Verfahrens durch die Maßnahmen des Patentanspruchs 1, hinsichtlich der Vorrichtung durch die Merkmale des Patentanspruchs 14 und hinsichtlich des Systems durch die Merkmale des Patentanspruchs 15 gelöst.

Weiterbildungen der Erfindung ergeben sich auch aus den abhängigen Ansprüchen.

Zur Lösung der Aufgabe wird ein Verfahren zum berechtigungsabhängigen Zugriff auf Multimediainhalte angegeben,
- bei dem durch ein erstes Endgerät eine erste Anforderung eines Multimediainhalts für eine Ausgabe des Multimediainhalts über das erste Endgerät bereitgestellt wird;
- bei dem anhand einer ersten Berechtigungsinformation überprüft wird, dass die Ausgabe des Multimediainhalts berechtigt ist;
- bei dem durch das erste Endgerät eine zweite Anforderung bereitgestellt wird für eine Ausgabe des Multimediainhalts über ein zweites Endgerät;
- bei dem überprüft wird, ob ein erster Sicherheitshinweis über das erste Endgerät auszugeben ist;
- bei dem die Ausgabe des Multimediainhalts über das zweite Endgerät erfolgt, falls der erste Sicherheitshinweis nicht auszugeben ist oder eine Eingabe einer bestätigenden Quittung für den ersten Sicherheitshinweis durch das erste Endgerät erkannt wird.

Hiermit ist der Vorteil verbunden, dass ein über das erste Endgerät geführter Berechtigungsnachweis für den Zugriff auf den Multimediainhalt zur Fortsetzung der Ausgabe des Multimediainhalts über das zweite Endgerät nicht wiederholt werden muss. Insbesondere ist eine erneute Eingabe der ersten Berechtigungsinformation über das erste oder das zweite Endgerät oder die zusätzliche Eingabe einer weiteren Berechtigungsinformation über das zweite Endgerät nicht erforderlich. Hat also ein Elternteil beispielsweise ein klassifiziertes Fernsehprogramm über sein mobiles Endgerät bis zur Ankunft in der von der Familie genutzten Wohnung verfolgt, so kann er mit dem Erreichen des heimischen, beispielsweise über ein Festnetz angeschlossenen Fernsehgeräts ohne erneuten Nachweis seiner Zugriffsberechtigung das klassifizierte Fernsehprogramm über das Fernsehgerät weiter verfolgen nach einer einfachen Bedienaktion an seinem mobilen Endgerät. Mit dieser Bedienaktion bestätigt er, dass die Ausgabe des klassifizierten Fernsehprogramms, oder allgemeiner eines klassifizierten Multimediainhalts, über das Fernsehgerät zulässig und gewollt ist. Wird durch das erste Endgerät oder durch das Zusammenwirken von dem ersten Endgerät mit einem Server einer das erste Endgerät umfassenden Netzlösung zur Bereitstellung von Multimediainhalten keine für den Zugriff auf den klassifizierten Multimediainhalt, insbesondere die Ausgabe des Multimediainhalts, ausreichende erste Berechtigungsinformation festgestellt, so bricht das Verfahren ab und wird nicht weiter durchgeführt.

Weiterhin ist es vorteilhaft, dass ein erster Sicherheitshinweis durch das erste Endgerät ausgegeben werden kann. So kann der Benutzer und /oder der Betreiber der Netzlösung zur Bereitstellung von Multimediainhalten beispielsweise durch Konfiguration des ersten Endgeräts sicherstellen, dass eine Fehlbedienungseingabe an dem ersten Endgerät nicht zur ungewollten Ausgabe des klassifizierten Multimediainhalts über das zweite Endgerät führt.

Ebenso kann der erste Sicherheitshinweis auch in Folge einer Konfiguration oder einer Einstellung des zweiten Endgeräts, einer mittelbaren Konfiguration des ersten Endgeräts durch Konfiguration oder Einstellung einer ersten Netzlösung zur Bereitstellung von Multimediainhalten für das erste Endgerät, einer mittelbaren Konfiguration des zweiten Endgeräts durch Konfiguration oder Einstellung einer zweiten Netzlösung zur Bereitstellung von Multimediainhalten für das zweite Endgerät oder dem Zusammenwirken mehrerer der genannten Konfigurationen und Einstellungen generiert werden. Hierbei können die Konfigurationen oder Einstellungen der genannten Netzlösungen globalen Charakters für die jeweilige Netzlösung sein, aber auch länder-, regions-, teilnehmerprofilspezifisch teilnehmergruppenspezifisch, spezifisch für eine Familie oder teilnehmerspezifisch. Hiermit ist der Vorteil verbunden, dass den strengen Vorgaben elterlicher Zugriffssteuerung entsprochen werden kann und beispielsweise die Ausgabe des klassifizierten Multimediainhalts über das zweite Endgerät zuverlässig vermieden werden kann, wenn das zweite Endgerät beispielweise in Benutzung ist, wenn die Zugriffsberechtigung des Benutzers des zweiten Endgeräts nicht für die Ausgabe des klassifizierten Multimediainhalts ausreichend ist oder wenn die Ausgabe des klassifizierten Multimediainhalts der vorherigen elterlichen Zustimmung bedarf.

Ferner kann die Überprüfung, ob der erste Sicherheitshinweis auszugeben ist, in Abhängigkeit von dem ersten Endgerät, in Abhängigkeit von dem zweiten Endgerät oder in Abhängigkeit von dem ersten Endgerät und dem zweiten Endgerät erfolgen. So kann das Ergebnis der Überprüfung, ob der erste Sicherheitshinweis auszugeben ist, abhängig sein von einem Zustand, einer Funktionalität, einer Einstellung oder Konfiguration des ersten Endgeräts und/oder von einem Zustand, einer Funktionalität, einer Einstellung oder Konfiguration des zweiten Endgeräts.

Der Multimediainhalt kann z.B. ein Fernsehprogramm, ein Video auf Anforderung, eine Hörfunksendung, ein Audio auf Anforderung, ein elektronisches Spiel oder ein elektronisches Buch sein. Ein Multimediainhalt kann ebenso beispielsweise einen auf Anforderung eines Teilnehmers abrufbaren multimedialen Inhalt, einen Spielfilm, einen Video Clip, eine Video-Botschaft, eine Sprachnachricht, eine Aufzeichnung eines Fernseh- oder Hörfunkprogramms, einen vollständigen oder teilweisen Mitschnitt eines Fernseh- oder Hörfunkprogramms, einen Audio-Inhalt, eine Internetseite, eine Walled Garden Seite, Bildmaterial, Tonmaterial, ein festes Bild, ein bewegtes Bild, ein Live Signal eines Fernseh- oder Hörfunkprogramms, eine Verknüpfung zu einem der vorstehenden Inhalte, eine beliebige Kombination der vorstehenden Inhalte oder eine beliebige Kombination der vorstehenden Inhalte mit weiteren Inhalten umfassen.

Ein Zugriff auf den Multimediainhalt kann die Ausgabe des Multimediainhalts oder eines Teils, insbesondere eines zeitlichen Abschnitts, einer Szene, eines Bildes, einer Bildsequenz, einer Toninformation, einer Textinformation, einer Metadateninformation, einer Adressinformation oder anderer mit dem Multimediainhalt assoziierter Information umfassen.

Ein Zugriff kann aber ebenso insbesondere eine Hinterlegung von mit dem Multimediainhalt assoziierter Information oder eine Veränderung von mit dem Multimediainhalt assoziierter Information sein. Insbesondere kann dies ein Voting, eine Markierung, ein Bookmark, eine Kommentierung, eine vollständige oder teilweise Speicherung, eine Bearbeitung von Bild-, Ton- und oder Textinformation des Multimediainhalts, ein Kopieren, eine Verbreitung oder Weiterleitung des Multimediainhalts oder von Teilen davon an weitere Nutzer sein.

Das Verfahren kann vollständig auf dem ersten und dem zweiten Endgerät zum Ablauf gelangen. Ebenso kann ein Zusammenwirken des ersten und/oder des zweiten Endgeräts mit Servern der jeweiligen Netzlösungen zur Bereitstellung von Multimediainhalten vorliegen. Beispielsweise kann ein Server einer IPTV Lösung, einer auf terrestrische Antenne oder Satellitenantenne gestützten hybriden Fernsehlösung mit Rückkanal des Endgeräts zum Dienstanbieter, einer auf DSL oder Kabelanschluss gestützten Festnetzfernsehlösung oder einer Mobilfunkfernsehlösung am Ablauf des Verfahrens beteiligt sein. Ebenso kann das Verfahren teilweise auf einem Netzübergangsknoten (Gateway) zwischen zwei der vorstehend genannten Fernsehlösungen, insbesondere beispielsweise auf einem Netzübergangsknoten zwischen einer IPTV Lösung des Festnetzes oder einer Mobilfunkfernsehlösung zum Ablauf gelangen. Auch kann das Verfahren in einer nur auf Endgeräte gestützten Fernsehlösung, z.B. einer peer-to-peer Fernsehlösung, zum Ablauf gelangen.

Ursächlich für die Bereitstellung der ersten Anforderung des Multimediainhalts, die Überprüfung der ersten Berechtigungsinformation, die Bereitstellung der zweiten Anforderung und die Erkennung der bestätigenden Quittung für den ersten Sicherheitshinweis durch das erste Endgerät können jeweils einfache Bedienaktionen an dem ersten Endgerät sein. Insbesondere können dies eine Eingabe einer Anforderung für den Multimediainhalt, eine Eingabe einer Zugangsberechtigung, eine Eingabe einer Anforderung zur Ausgabe des Multimediainhalts über das zweite Endgerät oder die Eingabe einer bestätigenden Quittung, wie zum Beispiel ein Drücken einer vorbestimmten Eingabetaste des ersten Endgeräts, sein.

Die erste Berechtigungsinformation kann typischerweise eine Geheimzahl (PIN) oder ein Zugangspasswort umfassen. Abhängig von der Funktionalität des ersten Endgeräts kann die erste Berechtigungsinformation aber auch Informationen anderer Mechanismen einer Nutzeridentifikation umfassen, wie z. B. Informationen einer Sprechererkennung, Informationen einer visuellen Personenerkennung oder einer Kombination von Informationen der voran stehend genannten oder anderer Mechanismen der Nutzeridentifikation.

Die anhand der ersten Berechtigungsinformation erfolgende Überprüfung, dass die Ausgabe des Multimediainhalts berechtigt ist, kann lokal in dem ersten Endgerät erfolgen. Hierzu kann das erste Endgerät Informationen lokal gespeichert haben oder bei Bedarf von einem Server oder Netzelement der ersten Netzlösung zur Bereitstellung von Multimediainhalten abrufen, die ihm erlauben, aus der ersten Berechtigungsinformation beispielsweise auf die mit der ersten Berechtigungsinformation verknüpften Zugriffsrechte zu schließen und diese mit dem Rating des Multimediainhalts zu vergleichen. Hierdurch kann das erste Endgerät lokal die für eine Ausgabe des Multimediainhalts notwendige Berechtigung auf Zulässigkeit im Hinblick auf die erste Berechtigungsinformation bewerten. Ebenso kann diese Bewertung aber auch auf einem Netzelement oder Server der ersten Netzlösung zur Bereitstellung von Multimediainhalten erfolgen, wobei das erste Endgerät hierfür die erste Anforderung, aus der der Multimediainhalt und/oder sein Rating hervorgehen, und die erste Berechtigungsinformation bereitstellt.

Vorteilhaft kann die Zugriffssteuerung beispielsweise innerhalb einer Familie als elterliche Zugriffssteuerung genutzt werden. Ebenso ist die Zugriffssteuerung innerhalb einer vorbestimmten Nutzergruppe oder Teilnehmergruppe möglich. Eine solche Nutzergruppe oder Teilnehmergruppe besitzt nicht notwendigerweise einen Bezug zu einer Familie.

Eine Weiterbildung ist es, dass die erste Berechtigungsinformation eine Master-Berechtigungsinformation ist oder eine Eingabe einer weiteren Berechtigungsinformation durch das erste Endgerät erkannt wird, wobei die weitere Berechtigungsinformation eine Master-Berechtigungsinformation ist.

Ist die erste Berechtigungsinformation eine Master-Berechtigungsinformation, so stehen vorteilhaft zusätzlich zur Zugriffsberechtigung auf klassifizierte Multimediainhalte beispielsweise Funktionen der elterlichen Zugangssteuerung automatisch zur Verfügung. Ist die erste Berechtigungsinformation keine Master-Berechtigungsinformation, so kann zusätzlich eine weitere Berechtigungsinformation über eine Eingabe an dem ersten Endgerät von dem ersten Endgerät erkannt werden und/oder bereitgestellt werden, wobei die weitere Berechtigungsinformation eine Master-Berechtigungsinformation ist. Durch die Verfügbarkeit der weiteren Berechtigungsinformation stehen ebenfalls beispielsweise Funktionen der elterlichen Zugriffssteuerung zusätzlich zur Verfügung. Diese können insbesondere die Funktionen der elterlichen Zugriffssteuerung der ersten Netzlösung zur Bereitstellung von Multimediainhalten für das erste Endgerät umfassen. Zusätzlich können durch Interkommunikation mit Netzelementen der zweiten Netzlösung zur Bereitstellung von Multimediainhalten für das zweite Endgerät und/oder durch Interkommunikation mit dem zweiten Endgerät Funktionen der elterlichen Zugriffssteuerung der zweiten Netzlösung zur Bereitstellung von Multimediainhalten für das zweite Endgerät verfügbar sein. Insbesondere kann die Master-Berechtigungsinformation eine Abfrage von Konfigurationsdaten und/oder Einstellungen der elterlichen Zugriffssteuerung der zweiten Netzlösung zur Bereitstellung von Multimediadaten für das zweite Endgerät durch das erste Endgerät erlauben. Damit ist der Vorteil verbunden, dass ein Elternteil beispielsweise die Einstellungen der elterlichen Zugriffssteuerung in beiden genannten Netzlösungen zur Bereitstellung von Multimediainhalten über das erste Endgerät ausgeben kann. Eine zusätzliche Verwendung des zweiten Endgeräts ist für diesen Zweck nicht mehr erforderlich. Konfigurationsdaten und/oder Einstellungen der elterlichen Zugriffssteuerung können die für die Kinder gesperrten bzw. frei geschalteten klassifizierten Multimediainhalte, z. B. Fernsehsendungen, Programmkanäle, Programmkategorien, die den Nutzern zugeordneten Zugriffsberechtigungen auf klassifizierte Multimediainhalte oder/und die Berechtigungsinformationen umfassen.

Eine weitere Weiterbildung ist es, dass die Master-Berechtigungsinformation eine Steuerungsberechtigung für das zweite Endgerät durch das erste Endgerät aufweist.

Insbesondere kann die Master-Berechtigungsinformation eine Eingabe von Konfigurationsdaten und/oder Einstellungen der elterlichen Zugriffssteuerung der zweiten Netzlösung zur Bereitstellung von Multimediadaten für das zweite Endgerät durch das erste Endgerät erlauben. Damit ist der Vorteil verbunden, dass ein Elternteil beispielsweise die Einstellungen der elterlichen Zugriffssteuerung in beiden genannten Netzlösungen zur Bereitstellung von Multimediainhalten über das erste Endgerät eingeben kann. Auch ist eine direkte Steuerung des zweiten Endgeräts, wie *z.*B. der Abbruch der Ausgabe eines Multimediainhalts an dem zweiten Endgerät über das erste Endgerät oder auch das Abschalten oder Einschalten des zweiten Endgeräts über das erste Endgerät möglich. Eine zusätzliche Verwendung des zweiten Endgeräts oder eines weiteren Endgeräts der zweiten Netzlösung zur Bereitstellung von Multimediainhalten ist hierfür jeweils nicht erforderlich.

Eine andere Weiterbildung ist es, dass eine Ausgabe einer zweiten Statusinformation über das erste Endgerät erfolgt, wobei die zweite Statusinformation das zweite Endgerät betrifft.

Mit Hilfe der Master-Berechtigungsinformation kann hiermit beispielsweise über das erste Endgerät abgefragt werden, ob das zweite Endgerät zur Zeit aktiv ist und auf welche Multimediainhalte es gegenwärtig zugreift. Ebenso kann ein gegenwärtiger Nutzer des zweiten Endgeräts oder eine gegenwärtige Benutzeridentifikation und / oder die jeweilige Zugriffsberechtigung des Nutzers des zweiten Endgeräts über das erste Endgerät ausgegeben werden. Auch können entsprechende Funktionen für einen Zeitpunkt in der Vergangenheit oder für ein Zeitintervall der Vergangenheit über das erste Endgerät ausgegeben werden. Wiederum vorteilhaft ist hierbei, dass ein Elternteil die zweite Statusinformation, welche das zweite Endgerät der zweiten Netzlösung zur Bereitstellung von Multimediainhalten betrifft, bequem über das erste Endgerät der ersten Netzlösung zur Bereitstellung von Multimediainhalten erhalten kann. Eine zusätzliche Verwendung des zweiten Endgeräts oder eines weiteren Endgeräts der zweiten Netzlösung zur Bereitstellung von Multimediainhalten ist hierfür jeweils nicht erforderlich.

Eine weitere Ausführungsform ist es, dass die zweite Statusinformation zumindest einen über das zweite Endgerät ausgegebenen oder in Ausgabe befindlichen weiteren Multimediainhalt betrifft.

Eine weitere Weiterbildung ist es, dass die zweite Statusinformation als Teil des ersten Sicherheitshinweises ausgegeben wird.

Dies hat den Vorteil, dass der Nutzer des ersten Endgeräts automatisch mit dem ersten Sicherheitshinweis zugleich und ohne weitere Bedienaktion Statusinformation über den Zustand des zweiten Endgeräts erfahren kann.

Auch ist es eine weitere Weiterbildung, dass die zweite Statusinformation nach einer dritten Anforderung durch das erste Endgerät separat von dem ersten Sicherheitshinweis ausgegeben wird.

Dies hat den Vorteil, dass der Nutzer des ersten Endgeräts die zweite Statusinformation auch dann erhalten kann, wenn der erste Sicherheitshinweis noch nicht erfolgt ist, nicht erfolgt oder bereits erfolgt ist. Der Nutzer des ersten Endgeräts kann hiermit vorteilhaft unabhängig von dem ersten Sicherheitshinweis und jederzeit auf die zweite Statusinformation zugreifen.

Eine weitere Weiterbildung ist es, dass die zweite Statusinformation zumindest eine der folgenden Informationen umfasst:
Titel des weiteren Multimediainhalts,
Kategorie des weiteren Multimediainhalts,
TV Kanal des weiteren Multimediainhalts,
Klassifizierung des weiteren Multimediainhalts

Dies hat den Vorteil einer detaillierten Information des Nutzers des ersten Endgeräts über die Art des Multimediainhalts, welcher über das zweite Endgerät bereits ausgegeben wurde oder sich in Ausgabe befindet.

Eine weitere Weiterbildung ist es, dass eine weitere Anforderung durch das erste Endgerät gestellt wird für eine Aktualisierung von mit einer dritten Berechtigungsinformation verknüpften Rechten und/oder der dritten Berechtigungsinformation, wobei die dritte Berechtigungsinformation zur Ausgabe eines zweiten weiteren Multimediainhalts über das zweite Endgerät berechtigt.

Dies hat den Vorteil, dass beispielsweise ein Elternteil unter Verwendung der Master-Berechtigungsinformation über das erste Endgerät für einen Multimediazugriff über das zweite Endgerät relevante Berechtigungsinformation und /oder die mit der Berechtigungsinformation verknüpften Zugriffsrechte aktualisieren kann.

Eine weitere Weiterbildung ist es, dass die Aktualisierung der mit der dritten Berechtigungsinformation verknüpften Rechte und/oder der dritten Berechtigungsinformation in dem zweiten Endgerät und /oder einer SmartCard des zweiten Endgeräts gespeichert wird.

Damit ist der Vorteil einer lokalen, schnell für das zweite Endgerät verfügbaren und nicht flüchtigen Speicherung der Aktualisierung der mit der dritten Berechtigungsinformation verknüpften Rechte und/oder der dritten Berechtigungsinformation verbunden. Vorteilhaft ist ebenso, dass hierzu keine lokalen Bedienfunktionen an dem zweiten Endgerät und/oder Handlungen an der SmartCard des zweiten Endgeräts erforderlich sind.

Auch ist es eine weitere Weiterbildung, dass die über das zweite Endgerät erfolgende Ausgabe des zweiten weiteren Multimediainhalts im Hinblick auf die Aktualisierung der mit der dritten Berechtigungsinformation verknüpften Rechte und/oder der dritten Berechtigungsinformation überprüft wird und die Ausgabe durch das zweite Endgerät unterbunden wird, falls die Aktualisierung den Wegfall der Berechtigung zum Zugriff auf den zweiten weiteren Multimediainhalt, insbesondere den Wegfall der Berechtigung der Ausgabe des zweiten weiteren Multimediainhalts, zur Folge hat.

Hiermit ist der Vorteil einer sofortigen Wirkung der Aktualisierung verbunden.

Ebenso ist es eine weitere Weiterbildung, dass die Ausgabe des Multimediainhalts über das erste Endgerät unmittelbar erfolgt oder die Ausgabe des Multimediainhalts vorgemerkt wird.

So kann vorteilhaft für eine bereits über das erste Endgerät erfolgende Ausgabe des Multimediainhalts eine Ausgabe des Multimediainhalts über das zweite Endgerät angefordert werden ohne wiederholte oder erneute Eingabe einer Berechtigungsinformation. Ebenso kann eine Ausgabe des Multimediainhalts über das zweite Endgerät aber auch vorgemerkt werden. Dies ist insbesondere von Vorteil im Hinblick auf eine einfache Bedienung und Planung von zukünftigen Ausgaben von Multimediainhalten, wenn der Multimediainhalt noch nicht zur Verfügung steht, da er beispielsweise identisch ist mit einer zukünftigen Nachrichtensendung. So kann beispielsweise ein Elternteil die Ausgabe eines klassifizierten Fernsehprogramms, dessen Ausgabe noch nicht erfolgt, mit Hilfe des ersten Endgeräts zur automatischen Ausgabe über das zweite Endgerät bestimmen. Über den ersten Sicherheitshinweis ist auch in diesem Falle gewährleistet, dass der klassifizierte Multimediainhalt nicht entgegen der Planung ungewollt an nicht berechtigte Nutzer ausgegeben wird.

Eine andere Weiterbildung besteht darin, dass ein zweiter Sicherheitshinweis über das zweite Endgerät ausgegeben wird, falls das zweite Endgerät zum Zeitpunkt des Beginns der Ausgabe des Multimediainhalts über das zweite Endgerät in Betrieb ist.

Dies hat den Vorteil, dass ein Nutzer des zweiten Endgeräts den Grund für den Beginn der Ausgabe des Multimediainhalts über das zweite Endgerät erfährt.

Eine weitere Weiterbildung ist es, dass ein dritter Sicherheitshinweis auf eine Rückweisung der zweiten Anforderung über das erste Endgerät ausgegeben wird, falls durch das zweite Endgerät eine ablehnende Quittung für den zweiten Sicherheitshinweis bereitgestellt wird.

Dies hat den Vorteil, dass ein Nutzer des zweiten Endgeräts die Ausgabe des Multimediainhalts über das zweite Endgerät auch zurückweisen kann. Eine solche Zurückweisung wird dem Nutzer des ersten Endgeräts in Form des dritten Sicherheitshinweises zur Kenntnis gebracht. Der dritte Sicherheitshinweis wird hierbei generiert aufgrund der ablehnenden Quittung, welche von dem zweiten Endgerät bereitgestellt wird. Die ablehnende Quittung auf den zweiten Sicherheitshinweis kann durch das zweite Endgerät bereitgestellt werden aufgrund einer Bedienereingabe an dem zweiten Endgerät.

Eine weitere Ausführungsform ist es, dass die Ausgabe des Multimediainhalts über das zweite Endgerät unmittelbar mit Verfügbarkeit des Multimediainhalts oder für einen vorbestimmten Zeitpunkt angefordert wird.

Hiermit ist der Vorteil verbunden, dass eine beispielsweise bereits über das erste Endgerät erfolgende Ausgabe des Multimediainhalts bis auf die eventuell notwendige bestätigende Quittung quasi sofort und ohne weitere Bedienaktionen oder zu einem definierten späteren Zeitpunkt über das zweite Endgerät fortgesetzt werden kann. Die Optionen der unmittelbaren Ausgabe des Multimediainhalts mit Verfügbarkeit des Multimediainhalts und /oder die Option der späteren Ausgabe des Multimediainhalts zu dem vorbestimmten Zeitpunkt können hierbei durch Eingaben des Nutzers des ersten Endgeräts ausgewählt werden. Dieser kann sowohl die gewünschte Option als auch den vorbestimmten Zeitpunkt am ersten Endgerät eingeben. Auch ergibt sich der Vorteil, dass die Ausgabe des Multimediainhalts schnellstmöglich mit Verfügbarkeit des Multimediainhalts erfolgen kann.

Ebenso ist es eine Weiterbildung, dass das zweite Endgerät in einen aktiven Betriebszustand geschaltet wird, falls es sich vor dem Zeitpunkt des Beginns der Ausgabe des Multimediainhalts über das zweite Endgerät in einem nicht aktiven Betriebszustand befindet.

Damit ist der Vorteil verbunden, dass Bedienaktionen des Einschaltens des zweiten Endgeräts entfallen und dass insbesondere bei einer Anforderung einer sofortigen Ausgabe des Multimediainhalts über das zweite Endgerät unerwünschte Wartezeiten vermieden werden.

Ferner ist es eine weitere Weiterbildung, dass der Multimediainhalt über das erste Endgerät weiter ausgegeben wird nach dem Zeitpunkt des Beginns der Ausgabe des Multimediainhalts über das zweite Endgerät.

Dies hat den Vorteil, dass die Ausgabe des Multimediainhalts über das erste Endgerät nicht so früh abgebrochen wird, dass Anteile des Multimediainhalts über das erste Endgerät nicht ausgegeben werden, deren Ausgabe über das zweite Endgerät laufzeitbedingt oder bedingt durch die beiden beteiligten Netzlösungen zur Bereitstellung des Multimediainhalts nicht erfolgt. Ebenso ergibt sich der Vorteil der weiteren Ausgabe des Multimediainhalts C über das erste und das zweite Endgerät.

Eine weitere Ausgestaltung ist es, dass das erste Endgerät und das zweite Endgerät einander zugeordnet werden.

Dies hat den Vorteil, dass eine bestehende Zuordnung des ersten und des zweiten Endgeräts eine andernfalls notwendige Abfrage der Daten zur Identifikation des zweiten Endgeräts im Rahmen der zweiten Anforderung überflüssig macht. Ist die Zuordnung von erstem und zweitem Endgerät bereits zum Zeitpunkt der Bereitstellung der zweiten Anforderung bekannt, dann hat das den Vorteil, dass notwendige Zugriffsdaten, z. B. die Adressdaten des zweiten Endgeräts, schnell zugreifbar gespeichert werden können, so dass eine schnelle Ausgabe des Multimediainhalts über das zweite Endgerät ermöglicht werden kann.

Eine weitere Weiterbildung ist es, dass
- das erste Endgerät einem ersten Dienstanbieternetz zugeordnet ist und mit Hilfe einer ersten Identifikationsinformation identifiziert wird,
- das zweite Endgerät einem zweiten Dienstanbieternetz zugeordnet ist und mit Hilfe einer zweiten Identifikationsinformation identifiziert wird, und
- das erste Endgerät und das zweite Endgerät einander zugeordnet werden durch Zuordnung der zweiten Identifikationsinformation zu dem ersten Endgerät.

Hiermit ist der Vorteil verbunden, dass eine Zuordnung des ersten und zweiten Endgeräts durch bereits vorhandene eindeutige Identifikationen des ersten und des zweiten Endgeräts innerhalb des ersten bzw. des zweiten Dienstanbieternetzes benutzt werden können zur einfachen Endgerätezuordnung. Insbesondere kann beispielsweise die MAC-Adresse zur Endgeräteidentifikation in einer auf IPTV basierenden Netzlösung zur Bereitstellung von Multimediainhalten herangezogen werden. In einer auf einem Mobilfunkfernsehen beruhenden Netzlösung zur Bereitstellung von Multimediainhalten können entsprechend die eindeutigen Geräteidentifikationen IMSI, MSISDN herangezogen werden.

Eine weitere Weiterbildung ist es, dass der erste Sicherheitshinweis über das erste Endgerät ausgegeben wird, falls nicht eine Eingabe einer zweiten Berechtigungsinformation durch das zweite Endgerät erkannt wurde, wobei die zweite Berechtigungsinformation zur Ausgabe des Multimediainhalts berechtigt.

Dies hat den Vorteil, dass der erste Sicherheitshinweis für den Fall, dass der Nutzer des zweiten Endgeräts ohnehin die Berechtigung zum Zugriff auf den Multimediainhalt besitzt, vermieden werden kann.

Eine weitere Weiterbildung ist es, dass mindestens ein Berechtigungsteuerungsserver vorgesehen wird, über welchen eine Kommunikation zwischen dem ersten Endgerät und dem zweiten Endgerät geführt wird.

Hiermit ist der implementierungstechnische Vorteil gegeben der Bündelung aller beispielsweise für die Funktionen der elterlichen Zugriffssteuerung notwendigen Funktionen in dem mindestens einen Berechtigungssteuerungsserver. Vorteilhaft kann dieser auf eigenen Netzelementen der jeweiligen Netzlösungen zur Bereitstellung von Multimediainhalten implementiert sein. Ebenfalls ist alternativ oder zusätzlich eine verteilte Implementierung auf den Endgeräten möglich.

Ausführungsbeispiele der Erfindung werden anhand der folgenden Figuren dargestellt:
- Fig.1: zeigt ein Flussdiagramm wesentlicher Verfahrensschritte;
- Fig.2: zeigt eine Ausgabe eines Multimediainhalts unter Mitwirkung eines Berechtigungssteuerungsservers;
- Fig.3: zeigt eine Ausgabe eines Multimediainhalts unter Mitwirkung zweier Berechtigungssteuerungsserver;
- Fig.4: zeigt eine Ausgabe eines Multimediainhalts unter Mitwirkung eines dezentralen Berechtigungssteuerungsservers;
- Fig.5: zeigt eine Ausgabe eines Multimediainhalts nach lokaler Prüfung einer Zugriffsberechtigung;
- Fig.6: zeigt einen auf dem HTTP Protokoll beruhenden Nachrichtenfluss für einen Wechsel einer Ausgabe eines klassifizierten Multimediainhalts von einem ersten Endgerät auf ein zweites Endgerät;
- Fig.7: zeigt einen auf dem HTTP Protokoll beruhenden Nachrichtenfluss für eine Aktualisierung von Zugriffsrechten über einen Berechtigungssteuerungs- server;
- Fig.8: zeigt einen auf dem HTTP Protokoll beruhenden Nachrichtenfluss für eine Aktualisierung von Zugriffsrechten über zwei Berechtigungssteuerungs- server;
- Fig.9: zeigt einen auf dem HTTP Protokoll beruhenden Nachrichtenfluss für eine Statusabfrage über einen Berechtigungssteuerungsserver;
- Fig.10: zeigt einen auf dem HTTP Protokoll beruhenden Nachrichtenfluss für eine Statusabfrage über zwei Berechtigungssteuerungsserver;

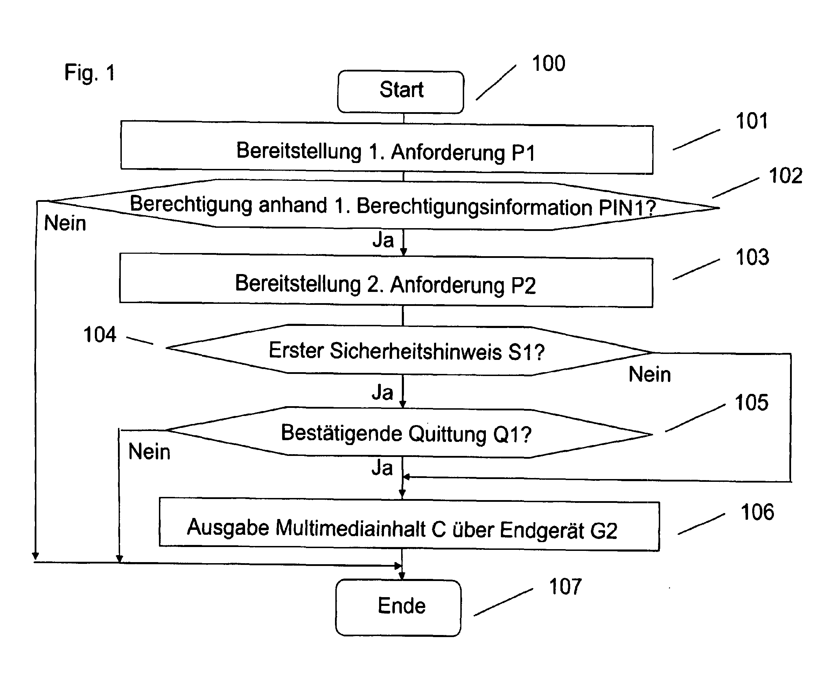

**Fig.1** zeigt ein Flussdiagramm wesentlicher Verfahrensschritte. Nach einem Start (Schritt 100) wird eine erste Anforderung P1 eines Multimediainhalts C durch ein erstes Endgerät bereitgestellt (Schritt 101) zur Ausgabe des Multimediainhalts C über das erste Endgerät. Die Ausgabe des Multimediainhalts C kann hierbei über eine in dem ersten Endgerät integrierte Ausgabeeinheit erfolgen, z. B. über das Display eines mobilen Telefons. Ebenso kann die Ausgabe über eine nicht im ersten Endgerät integrierte Ausgabeeinheit erfolgen, wie z. B. ein an eine Set Top Box angeschlossenes Fernsehgerät.

Ist der Multimediainhalt C klassifiziert, also nur mit einer mindestens erforderlichen Zugriffsberechtigung zugreifbar und/oder ausgebbar, dann wird der Nutzer des ersten Endgeräts durch das erste Endgerät aufgefordert zur Eingabe seiner persönlichen Identifizierungsnummer oder eines Passworts und/oder weiterer Eingaben, die der Bestimmung der Nutzeridentität dienlich sind. Die zur Nutzeridentifizierung dienlichen Eingabeinformationen werden Teil einer ersten Berechtigungsinformation PIN1. Die Eingabe von der Nutzeridentifikation dienlichen Daten kann entfallen, wenn diese im Zuge des Gebrauchs des ersten Endgeräts bereits erfolgt ist und die der Nutzeridentifikation dienlichen Daten beispielsweise in dem ersten Endgerät gespeichert wurden. Zusätzlich kann die erste Berechtigungsinformation PIN1 auch weitere der Überprüfung einer Zugriffsberechtigung dienliche Daten umfassen, z. B. Information über das erste Endgerät, eine Identifikation des ersten Endgeräts oder eine Adressinformation des ersten Endgeräts. Die erste Berechtigungsinformation PIN1 wird in einem Schritt 102 dahingehend überprüft, dass sie den Nutzer des ersten Endgeräts für die Ausgabe des gemäß der ersten Anforderung P1 gewünschten Multimediainhalts C berechtigt. Hierzu werden mit der ersten Berechtigungsinformation PIN1 verbundene Zugriffsrechte verglichen mit dem gemäß Rating oder Klassifizierung des Multimediainhalts C mindestens erforderlichen Zugriffsrechten für die Ausgabe des Multimediainhalts. Sind die mit der ersten Berechtigungsinformation PIN1 verbundenen Zugriffsrechte nicht ausreichend für die Ausgabe des Multimediainhalts C oder wird keine gültige erste Berechtigungsinformation PIN1 verfügbar, so endet das Verfahren in einem Schritt 107 ohne Ausgabe des Multimediainhalts C.

Nach erfolgter Überprüfung, dass die Ausgabe des Multimediainhalts C berechtigt ist, wird in einem Schritt 103 eine zweite Anforderung P2 bereitgestellt für eine Ausgabe des Multimediainhalts C über ein zweites Endgerät G2. Der Zeitpunkt der Bereitstellung der zweiten Anforderung P2 kann insbesondere ein Zeitpunkt nach einem Beginn und vor einem Ende der Ausgabe des Multimediainhalts C über das erste Endgerät sein. Ebenso kann die zweite Anforderung jedoch auch vor dem Beginn der Ausgabe des Multimediainhalts C über das erste Endgerät erfolgen oder nach erfolgter Ausgabe des Multimediainhalts C über das erste Endgerät. Dies ist beispielsweise möglich im Hinblick auf eine noch nicht begonnene Fernsehsendung oder einen bereits angeschauten Film auf Anforderung (VoD) .

In Folge der zweiten Anforderung P2 kann es gemäß einem Schritt 104 zur Ausgabe eines ersten Sicherheitshinweises S1 über das erste Endgerät kommen. Die Ausgabe des ersten Sicherheitshinweises S1 kann abhängig von dem ersten Endgerät und/oder dem zweiten Endgerät G2 erfolgen. Insbesondere der Zustand des ersten Endgeräts und/oder der Zustand des zweiten Endgeräts G2 können ursächlich sein für die Ausgabe des ersten Sicherheitshinweises S1. So kann z. B. das erste Endgerät so konfiguriert sein, dass nachdem nach der Bereitstellung der zweiten Anforderung P2 die Voraussetzungen für eine Ausgabe des Multimediainhalts C über das zweite Endgerät G2 verifiziert wurden, das erste Endgerät den Bediener unbedingt auf die durch die zweite Anforderung P2 verlangte Ausgabe des Multimediainhalts C über das zweite Endgerät G2 hinweist und eine Eingabe einer bestätigenden Quittung Q1 als unbedingte Sicherheitsmaßnahme gegen Fehlbedienung verlangen. Ebenso kann das zweite Endgerät G2 so konfiguriert sein, dass es bei einer von dem ersten Endgerät angeforderten Ausgabe des Multimediainhalts C die unbedingte Ausgabe des ersten Sicherheitshinweises S1 über das erste Endgerät zum Ausschluss ungewollter Störungen der Nutzung des zweiten Endgeräts G2 verlangt. Auch können netzbetreiberseitige Einstellungen und Konfiguration der Funktionalität des ersten Endgeräts, des zweiten Endgeräts G2 und /oder von Netzelementen der beteiligten Lösungen zur Bereitstellung von Multimediainhalten zur Ausgabe des ersten Sicherheitshinweises S1 führen. Aufgrund der Konfiguration kann die Ausgabe des ersten Sicherheitshinweises S1 auch unterbleiben. Insbesondere für den Fall, dass der Nutzer des zweiten Endgeräts G2 zum Zeitpunkt der Ausgabe des Multimediainhalts C bereits als für die Ausgabe des Multimediainhalts C berechtigt erkannt ist, kann die Ausgabe des ersten Sicherheitshinweises S1 auch entfallen. Wird der erste Sicherheitshinweis S1 nicht ausgegeben, so setzt das Verfahren mit einem Schritt 106 fort, gemäß dem die Ausgabe des Multimediainhalts C über das zweite Endgerät G2 erfolgt. Abhängig von der zeitlichen Verfügbarkeit des Multimediainhalts C und der zweiten Anforderung P2 kann die Ausgabe des Multimediainhalts C über das zweite Endgerät G2 sofort oder später erfolgen.

Wird der erste Sicherheitshinweis S1 ausgegeben, so kann damit die explizite Aufforderung zur Eingabe der bestätigenden Quittung Q1 verbunden sein. Ebenfalls kann die Eingabe der bestätigenden Quittung Q1 auch ohne explizite Eingabeaufforderung nach Ausgabe des ersten Sicherheitshinweises S1 erfolgen. Wird die Eingabe der bestätigenden Quittung Q1 durch das erste Endgerät gemäß einem Schritt 105 des Verfahrens erkannt, so setzt das Verfahren mit dem Schritt 106 fort, gemäß dem die Ausgabe des Multimediainhalts C über das zweite Endgerät G2 erfolgt. Wird die Eingabe der bestätigenden Quittung Q1 durch das erste Endgerät gemäß dem Schritt 105 des Verfahrens nicht erkannt, beispielsweise nach Ablauf einer Schutzzeit oder wiederholter Eingabeanforderungen, so endet das Verfahren in dem Schritt 107 ohne Ausgabe des Multimediainhalts C.

Nach Ausgabe des Multimediainhalts C über das zweite Endgerät G2 gemäß Schritt 106 endet das Verfahren ebenfalls in dem Schritt 107.

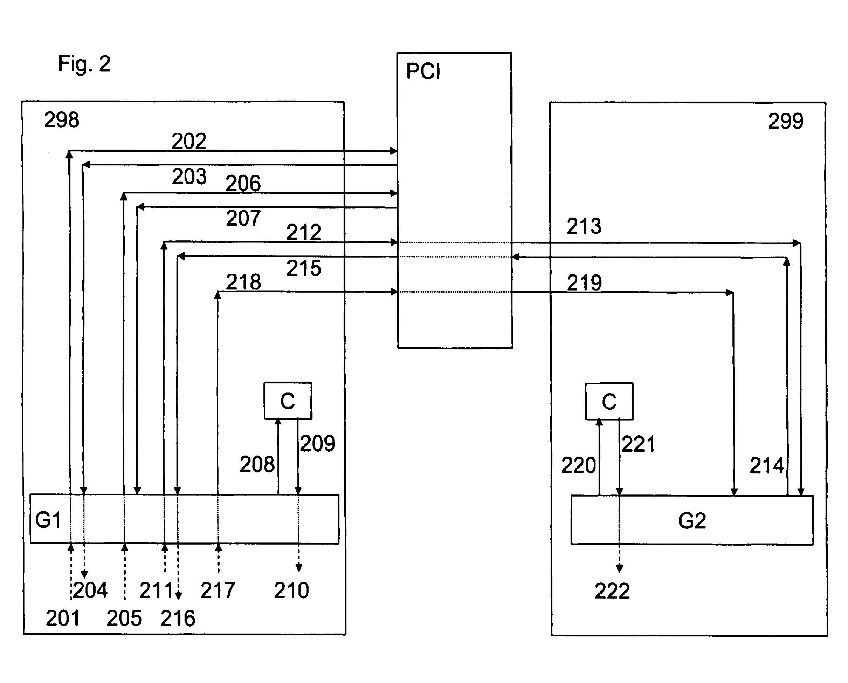

Fig.2 zeigt eine Ausgabe eines Multimediainhalts C unter Mitwirkung eines Berechtigungssteuerungsservers PCI. Der Berechtigungssteuerungsserver PCI ist hierbei eine zentrale Einrichtung und ermöglicht eine Interkommunikation eines ersten Dienstanbieternetzes 298, welches eine erste Netzlösung zur Bereitstellung von Multimediainhalten zur Verfügung stellt für ein erstes Endgerät G1, und eines zweiten Dienstanbieternetzes 299, welches eine zweite Netzlösung zur Bereitstellung von Multimediainhalten zur Verfügung stellt für ein zweites Endgerät G2. Insbesondere ermöglicht der Berechtigungssteuerungsserver PCI die Kommunikation zwischen dem ersten Endgerät G1 und dem zweiten Endgerät G2. Zur Kommunikation mit dem Berechtigungssteuerungsserver PCI besitzen das erste Endgerät G1 und das zweite Endgerät G2 jeweils Client-Funktionalität für den Berechtigungssteuerungsserver PCI, welche vorzugsweise in Software realisiert sein kann.

Funktionen des Berechtigungssteuerungsservers PCI können eine Unterstützung einer das erste und das zweite Dienstanbieternetz umfassenden Verwaltung von Zugriffsrechten der elterlichen Zugriffssteuerung auf Multimediainhalte und von Zugriffsberechtigungsinformationen betreffen. Dies ermöglicht beispielsweise die Verfügbarkeit gleicher Berechtigungsinformationen im ersten und im zweiten Dienstanbieternetz. Ebenso ermöglicht es die Verfügbarkeit gleicher Klassifizierung von im ersten und im zweiten Dienstanbieternetz verfügbaren Multimediainhalten, sowie gleiche oder vergleichbare Klassendefinitionen.

Funktionen des Berechtigungssteuerungsservers PCI können ebenso die Überwachung des Status des ersten oder zweiten Endgeräts im Rahmen der elterlichen Zugriffssteuerung betreffen. Auch können Funktionen des Berechtigungssteuerungsservers PCI vorhanden sein zur Abfrage und zur Aktualisierung der Konfiguration und/oder Einstellung der elterlichen Zugriffssteuerung in dem zweiten Dienstanbieternetz 299 über das erste Endgerät G1 des ersten Dienstanbieternetzes 298. So kann der Berechtigungssteuerungsserver PCI Ausgabeanforderungen und/oder Aktualisierungen der Konfiguration der elterlichen Zugriffssteuerung von dem ersten Endgerät G1 erhalten und an das zweite Endgerät G2 weiterleiten, woraufhin das zweite Endgerät G2 die für die Ausgabeanforderung notwendigen Daten dem Berechtigungssteuerungsserver PCI zurückschickt oder die erhaltenen Aktualisierungen umsetzt, wodurch eine überprüfbare Synchronisierung der Konfiguration der elterlichen Zugriffssteuerung in dem ersten Dienstanbieternetz 298 und dem zweiten Dienstanbieternetz 299 erreicht wird.

Ein Einsatz eines einzigen Berechtigungssteuerungsservers PCI ist insbesondere dann sinnvoll, wenn das erste Dienstanbieternetz 298 und das zweite Dienstanbieternetz 299 einem einzigen Unternehmen oder einer gleichen Geschäftseinheit eines Unternehmens, z. B. eines Telekommunikationsunternehmens, zugehörig sind. In diesem Falle liegt die Funktionalität und die Verfügbarkeit des Berechtigungssteuerungsservers PCI in einer Hand, was eine besonders einfache Implementierung ermöglicht.

Durch eine Eingabe 201 an dem ersten Endgerät G1 gibt ein Nutzer des ersten Endgeräts G1 dem ersten Dienstanbieternetz 298 Kenntnis davon, dass er eine Ausgabe des Multimediainhalts C wünscht. In Form einer Nachricht 202 stellt das erste Endgerät G1 daraufhin dem Berechtigungssteuerungsserver PCI eine erste Anforderung des Multimediainhalts C für eine Ausgabe des Multimediainhalts C über das erste Endgerät G1 bereit.

Der Berechtigungssteuerungsserver PCI bewertet die erste Anforderung und ermittelt, dass der Multimediainhalt C ein klassifizierter Inhalt ist, dessen Ausgabe den Nachweis einer entsprechenden Berechtigung erfordert. Hiervon informiert der Berechtigungssteuerungsserver PCI das erste Endgerät G1 mit einer Nachricht 203.

Aufgrund des Erhalts der Nachricht 203 gibt das erste Endgerät G1 eine Eingabeanforderung 204 für eine Persönliche Identifikationsnummer des Nutzers des ersten Endgeräts G1 aus.

Durch eine Eingabe 205 an dem ersten Endgerät G1 gibt der Nutzer des ersten Endgeräts G1 daraufhin seine Persönliche Identifikationsnummer PIN1 ein. In Form einer Nachricht 206 stellt das erste Endgerät G1 dem Berechtigungssteuerungsserver PCI die Persönliche Identifikationsnummer PIN1 zur Verfügung. Der Berechtigungssteuerungsserver PCI überprüft nach Erhalt der Nachricht 206, dass die Ausgabe des Multimediainhalts C gemäß der ersten Anforderung berechtigt ist. Hierzu ermittelt der Berechtigungssteuerungsserver PCI anhand der Persönlichen Identifikationsnummer PIN1, ob der Nutzer des Endgeräts G1 auf die Klasse klassifizierter Multimediainhalte, der der Multimediainhalt C zugeordnet ist, Zugriffsberechtigung besitzt. Dies ist im vorliegenden Beispiel der Fall, womit der Berechtigungssteuerungsserver PCI dem ersten Endgerät G1 in Form einer Nachricht 207 mitteilt, dass eine Zugriffsberechtigung des Nutzers des ersten Endgeräts G1 auf den Multimediainhalt C besteht. Die Nachricht 207 kann zusätzlich Zugriffsinformation für den Multimediainhalt C umfassen, beispielsweise eine Adresse eines VoD-Servers oder eine Multicast-Adresse, von dem das erste Endgerät G1 den Multimediainhalt C beziehen soll. Auch kann die Nachricht 207 Entschlüsselungsinformation umfassen für den Fall, dass der Multimediainhalt C unter den genannten Adressen in verschlüsselter Form bezogen wird. Ebenso kann die Nachricht 207 Information enthalten, von wo das erste Endgerät G1 die voran stehenden Daten beziehen oder zugreifen kann.

Aufgrund des Erhalts der Nachricht 207 verschafft sich das erste Endgerät G1 die für den Zugriff auf den Multimediainhalt C erforderliche Zugriffsinformation, sofern diese noch nicht oder nicht vollständig vorhanden ist. Ist der Multimediainhalt C sofort verfügbar, z. B. als Video auf Anforderung oder als bereits laufendes Fernsehprogramm, so verlangt das erste Endgerät G1 sofortigen Zugriff auf den Multimediainhalt C in Form einer Nachricht 208. Diese kann beispielsweise eine Anforderung des Multimediainhalts C von einem VoD Server sein oder ein IGMP Kommando zum Beitritt des ersten Endgeräts G1 zu einer Multicast Gruppe, über die der Multimediainhalt C bereitgestellt wird. Dies führt zur Bereitstellung des Multimediainhalts C für das erste Endgerät G1 in Form einer Kommunikationsbeziehung 209, welche eine Bereitstellung per Streaming beispielsweise über das RTSP Protokoll oder jede andere Bereitstellung in Form eines Ladens mit einem geeigneten Protokoll wie beispielsweise UDP, TCP, RTP, FTP oder eine Mischung aus den genannten Bereitstellungsarten umfassen kann.

Mit Verfügbarkeit des Multimediainhalts C oder eines Teils davon in dem Endgerät G1 erfolgt eine Ausgabe 210 des Multimediainhalts C über das erste Endgerät G1.

Steht der gemäß der ersten Anforderung gewünschte Multimediainhalt C noch nicht zur Verfügung, da es sich beispielsweise um ein Fernsehprogramm handelt, welches erst am Folgetag zur Ausgabe bereitsteht, setzt das erste Endgerät G1 sich ein entsprechendes Zeitglied und initiiert mit Ablauf des Zeitglieds rechtzeitig mit der Verfügbarkeit des Multimediainhalts C die Ausgabe 210 des Multimediainhalts C durch Ausgabe der Nachricht 208.

Durch eine Eingabe 211 an dem ersten Endgerät G1 gibt der Nutzer des ersten Endgeräts G1 dem ersten Dienstanbieternetz 298 Kenntnis davon, dass er die Ausgabe des laufenden oder des zukünftig verfügbaren Multimediainhalts C über das zweite Endgerät G2 wünscht. In Form einer Nachricht 212 stellt das erste Endgerät G1 daraufhin dem Berechtigungssteuerungsserver PCI eine zweite Anforderung des Multimediainhalts C für eine Ausgabe des Multimediainhalts C über das zweite Endgerät G2 bereit. Der Berechtigungssteuerungsserver PCI informiert das zweite Endgerät G2 hiervon in Form einer Nachricht 213. Das zweite Endgerät G2 quittiert die Nachricht 213 mit einer Nachricht 214, in welcher beispielsweise eine Nichtverfügbarkeit des zweiten Endgeräts für eine Ausgabe des Multimediainhalts C, eine Bereitschaft zur Ausgabe des Multimediainhalts C, eine Statusinformation des zweiten Endgeräts G2 oder/und eine Anforderung zur Ausgabe eines ersten Sicherheitshinweises an dem ersten Endgerät G1 kommuniziert werden kann.

Nach Auswertung der Nachricht 214 informiert der Berechtigungssteuerungsserver PCI das erste Endgerät G1 in Form einer Nachricht 215 darüber, ob eine Ausgabe des Multimediainhalts C über das zweite Endgerät G2 möglich ist und ob eine Ausgabe eines ersten Sicherheitshinweises an dem ersten Endgerät G1 notwendig ist.

Im vorliegenden Fall wird das erste Endgerät G1 mit der Nachricht 215 dahingehend informiert, dass die Ausgabe des Multimediainhalts C über das zweite Endgerät G2 möglich ist und dass aufgrund des Zustands und der Konfiguration des zweiten Endgeräts G2 die Ausgabe eines ersten Sicherheitshinweises an dem ersten Endgerät G1 nicht erforderlich ist. Daraufhin überprüft das erste Endgerät G1 seine Konfiguration und stellt fest, dass der Nutzer des ersten Endgeräts G1 festgelegt hat, einen unbedingten ersten Sicherheitshinweis aufgrund der zweiten Anforderung zu erhalten, um Fehlbedienung sicher auszuschließen.

Das erste Endgerät G1 gibt hierauf den ersten Sicherheitshinweis in Form einer Ausgabe 216 aus. Die Ausgabe 216 kann insbesondere die Information umfassen, dass eine Ausgabe des Multimediainhalts C über das zweite Endgerät G2 möglich ist, ferner kann sie in Abhängigkeit von der Zugriffsberechtigung der Persönlichen Identifikationsnummer des Nutzers des ersten Endgeräts G1 Statusinformationen über das zweite Endgerät G2 enthalten.

Durch eine Eingabe 217 an dem ersten Endgerät G1 gibt der Nutzer des ersten Endgeräts G1 eine bestätigende Quittung auf den ersten Sicherheitshinweis. Dies führt zur Information des Berechtigungssteuerungsservers PCI vermittels einer Nachricht 218. Mit Erhalt der Nachricht 218 informiert der Berechtigungssteuerungsserver PCI das zweite Endgerät G2 mit einer Nachricht 219 davon, dass die Ausgabe des Multimediainhalts C über das zweite Endgerät G2 bestätigt ist und erfolgen soll.

Aufgrund des Erhalts der Nachricht 219 verschafft sich das zweite Endgerät G2 die für den Zugriff auf den Multimediainhalt C erforderliche Zugriffsinformation, sofern diese noch nicht oder nicht vollständig vorhanden ist. Ist der Multimediainhalt C sofort verfügbar, z. B. als Video auf Anforderung oder als bereits laufendes Fernsehprogramm, so verlangt das zweite Endgerät G2 sofortigen Zugriff auf den Multimediainhalt C in Form einer Nachricht 220. Diese kann beispielsweise eine Anforderung des Multimediainhalts C von einem VoD Server sein oder ein IGMP Kommando zum Beitritt des zweiten Endgeräts G2 zu einer Multicast Gruppe, über die der Multimediainhalt C bereitgestellt wird. Dies führt zur Bereitstellung des Multimediainhalts C für das zweite Endgerät G2 in Form einer Kommunikationsbeziehung 221, welche eine Bereitstellung per Streaming beispielsweise über das RTSP Protokoll oder jede andere Bereitstellung in Form eines Ladens mit einem geeigneten Protokoll wie beispielsweise UDP, TCP, RTP, FTP oder eine Mischung aus den genannten Bereitstellungsarten umfassen kann.

Mit Verfügbarkeit des Multimediainhalts C oder eines Teils davon in dem zweiten Endgerät G2 erfolgt eine Ausgabe 222 des Multimediainhalts C über das zweite Endgerät G2.

Steht der gemäß der ersten Anforderung gewünschte Multimediainhalt C noch nicht zur Verfügung, da es sich beispielsweise um ein Fernsehprogramm handelt, welches erst am Folgetag zur Ausgabe bereitsteht, setzt das zweite Endgerät G2 sich ein entsprechendes Zeitglied und initiiert mit Ablauf des Zeitglieds rechtzeitig mit der Verfügbarkeit des Multimediainhalts C die Ausgabe 222 des Multimediainhalts C durch Ausgabe der Nachricht 220.

Die Ausgabe des Multimediainhalts C über das erste Endgerät G1 und die Ausgabe des Multimediainhalts C über das zweite Endgerät G2 können unterschiedliche Kodierung erfordern. Auch können die Ausgabe des Multimediainhalts C über das erste Endgerät G1 und die Ausgabe des Multimediainhalts C über das zweite Endgerät G2 unterschiedliche Verfügbarkeitsadressen und Verschlüsselungen erforderlich machen. So ist i. a. nicht davon auszugehen, dass der Multimediainhalt C für die Ausgabe über das erste Endgerät G1 und der Multimediainhalt C für die Ausgabe über das zweite Endgerät G2 beispielsweise von dem gleichen VoD-Server oder der gleichen Multicast Gruppe bezogen werden können.

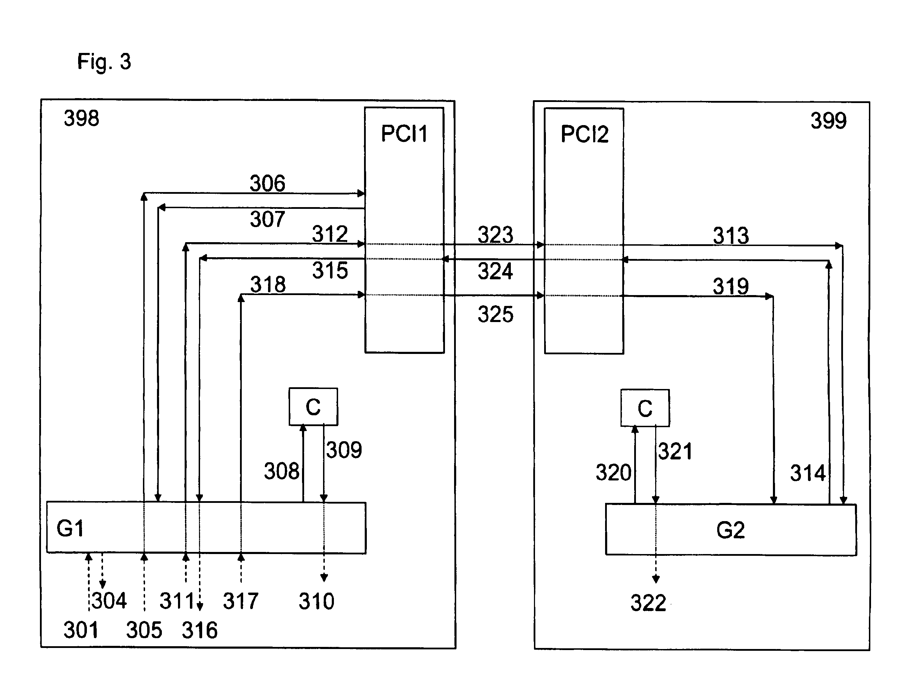

Fig.3 zeigt eine Ausgabe eines Multimediainhalts C unter Mitwirkung zweier Berechtigungssteuerungsserver PCI1, PCI2. Ein erster Berechtigungssteuerungsserver PCI1 ist eine zentrale Einrichtung eines ersten Dienstanbieternetzes 398, welches eine erste Netzlösung zur Bereitstellung von Multimediainhalten zur Verfügung stellt für ein erstes Endgerät G1. Ein zweiter Berechtigungssteuerungsserver PCI2 ist eine zentrale Einrichtung eines zweiten Dienstanbieternetzes 399, welches eine zweite Netzlösung zur Bereitstellung von Multimediainhalten zur Verfügung stellt für ein zweites Endgerät G2. Der erste Berechtigungssteuerungsserver PCI1 und der zweite Berechtigungssteuerungsserver PCI2 ermöglichen eine Interkommunikation des ersten Dienstanbieternetzes 398 und des zweiten Dienstanbieternetzes 399. Insbesondere ermöglichen der erste Berechtigungssteuerungsserver PCI1 und der zweite Berechtigungssteuerungsserver PCI2 die Kommunikation zwischen dem ersten Endgerät G1 und dem zweiten Endgerät G2. Zur Kommunikation mit dem ersten Berechtigungssteuerungsserver PCI1 besitzt das erste Endgerät G1 eine Client-Funktionalität für den ersten Berechtigungssteuerungsserver PCI1, welche vorzugsweise in Software realisiert sein kann. Zur Kommunikation mit dem zweiten Berechtigungssteuerungsserver PCI2 besitzt das zweite Endgerät G2 eine Client-Funktionalität für den zweiten Berechtigungssteuerungsserver PCI2, welche ebenfalls vorzugsweise in Software realisiert sein kann.

Ein Einsatz des ersten und des zweiten Berechtigungssteuerungsservers ist insbesondere dann sinnvoll, wenn das erste Dienstanbieternetz 398 und das zweite Dienstanbieternetz 399 nicht einem einzigen Unternehmen oder nicht einer gleichen Geschäftseinheit eines Unternehmens zugehörig sind. Dies hat den Vorteil, dass zwischen dem ersten und dem zweiten Berechtigungssteuerungsserver eine neutrale Nachrichtenschnittstelle geschaffen werden kann und eine Anpassung auf das erste bzw. das zweite Dienstanbieternetz jeweils in dem ersten bzw. dem zweiten Berechtigungssteuerungsserver vorgenommen werden kann. Im Hinblick auf eine stets einwandfreie Synchronisation von Konfigurationsdaten der elterlichen Zugriffssteuerung kann einer der beiden Berechtigungssteuerungsserver zu einem designierten Berechtigungssteuerungsserver definiert werden, welcher jeweils die konsistente Aktualisierung der Konfigurationsdaten der elterlichen Zugriffssteuerung bei Bedarf oder auf Anforderung beispielweise eines Bedieners vornimmt. Hiermit kann vorteilhaft ausgeschlossen werden, dass eine durch das erste Dienstanbieternetz 398 initiierte Aktualisierung von Konfigurationsdaten der elterlichen Zugriffssteuerung im zweiten Dienstanbieternetz 399 und eine annähernd gleichzeitige, durch das zweite Dienstanbieternetz 399 initiierte Aktualisierung von Konfigurationsdaten der elterlichen Zugriffssteuerung im ersten Dienstanbieternetz 398 zu Inkonsistenzen der Konfigurationsdaten der elterlichen Zugriffssteuerung führen und/oder zu Zugriffskonflikten beim Zugriff auf die Konfigurationsdaten der elterlichen Zugriffssteuerung.

Durch eine Eingabe 301 an dem ersten Endgerät G1 gibt ein Nutzer des ersten Endgeräts G1 dem ersten Dienstanbieternetz 398 Kenntnis davon, dass er eine Ausgabe des Multimediainhalts C wünscht.

Das erste Endgerät G1 bewertet die Eingabe 301 und ermittelt, dass der Multimediainhalt C ein klassifizierter Inhalt ist, dessen Ausgabe den Nachweis einer entsprechenden Berechtigung erfordert. Hierauf gibt das erste Endgerät G1 eine Eingabeanforderung 304 für eine Persönliche Identifikationsnummer des Nutzers des ersten Endgeräts G1 aus.

Durch eine Eingabe 305 an dem ersten Endgerät Gl gibt der Nutzer des ersten Endgeräts G1 daraufhin seine Persönliche Identifikationsnummer PIN1 ein. In Form einer Nachricht 306 stellt das erste Endgerät G1 dem Berechtigungssteuerungsserver PCI1 eine erste Anforderung des Multimediainhalts C für eine Ausgabe des Multimediainhalts C über das erste Endgerät G1 bereit. Die Nachricht 306 umfasst hierbei die Persönliche Identifikationsnummer PIN1. Der Berechtigungssteuerungsserver PCI1 überprüft nach Erhalt der Nachricht 306, dass die Ausgabe des Multimediainhalts C gemäß der ersten Anforderung berechtigt ist. Hierzu ermittelt der Berechtigungssteuerungsserver PCI anhand der Persönlichen Identifikationsnummer PIN1, ob der Nutzer des Endgeräts G1 auf die Klasse klassifizierter Multimediainhalte, der der Multimediainhalt C zugeordnet ist, Zugriffsberechtigung besitzt. Dies ist im vorliegenden Beispiel der Fall, womit der Berechtigungssteuerungsserver PCI1 dem ersten Endgerät G1 in Form einer Nachricht 307 mitteilt, dass eine Zugriffsberechtigung des Nutzers des ersten Endgeräts G1 auf den Multimediainhalt C besteht. Die Nachricht 307 kann zusätzlich Zugriffsinformation für den Multimediainhalt C umfassen, beispielsweise eine Adresse eines VoD-Servers oder eine Multicast-Adresse, von dem das erste Endgerät G1 den Multimediainhalt C beziehen soll. Auch kann die Nachricht 307 Entschlüsselungsinformation umfassen für den Fall, dass der Multimediainhalt C unter den genannten Adressen in verschlüsselter Form bezogen wird.

Aufgrund des Erhalts der Nachricht 307 verschafft sich das erste Endgerät G1 die für den Zugriff auf den Multimediainhalt C erforderliche Zugriffsinformation, sofern diese noch nicht oder nicht vollständig vorhanden ist. Da der Multimediainhalt C im vorliegenden Beispiel sofort verfügbar ist, z. B. als Video auf Anforderung oder als bereits laufendes Fernsehprogramm, verlangt das erste Endgerät G1 sofortigen Zugriff auf den Multimediainhalt C in Form einer Nachricht 308. Diese kann beispielsweise eine Anforderung des Multimediainhalts C von einem VoD Server sein oder ein IGMP Kommando zum Beitritt des ersten Endgeräts G1 zu einer Multicast Gruppe, über die der Multimediainhalt C bereitgestellt wird. Dies führt zur Bereitstellung des Multimediainhalts C für das erste Endgerät G1 in Form einer Kommunikationsbeziehung 309, welche eine Bereitstellung per Streaming beispielsweise über das RTSP Protokoll oder jede andere Bereitstellung in Form eines Ladens mit einem geeigneten Protokoll wie beispielsweise UDP, TCP, RTP, FTP oder eine Mischung aus den genannten Bereitstellungsarten umfassen kann.

Mit Verfügbarkeit des Multimediainhalts C oder eines geeigneten Teils davon in dem ersten Endgerät G1 erfolgt eine Ausgabe 310 des Multimediainhalts C über das erste Endgerät G1.

Durch eine Eingabe 311 an dem ersten Endgerät G1 gibt der Nutzer des ersten Endgeräts G1 dem ersten Dienstanbieternetz 398 Kenntnis davon, dass er die Ausgabe des laufenden Multimediainhalts C schnellstmöglich über das zweite Endgerät G2 wünscht. In Form einer Nachricht 312 stellt das erste Endgerät G1 daraufhin dem Berechtigungssteuerungsserver PCI1 eine zweite Anforderung des Multimediainhalts C für eine Ausgabe des Multimediainhalts C über das zweite Endgerät G2 bereit. Der erste Berechtigungssteuerungsserver PCI1 informiert hiervon den zweiten Berechtigungssteuerungsserver PCI2 in Form einer Nachricht 323. Der zweite Berechtigungssteuerungsserver PCI2 informiert das zweite Endgerät G2 hiervon in Form einer Nachricht 313. Das zweite Endgerät G2 quittiert die Nachricht 313 mit einer Nachricht 314, in welcher beispielsweise eine Nichtverfügbarkeit des zweiten Endgeräts G2 für eine Ausgabe des Multimediainhalts C, eine Bereitschaft zur Ausgabe des Multimediainhalts C, eine Statusinformation des zweiten Endgeräts G2 oder/und eine Anforderung zur Ausgabe eines ersten Sicherheitshinweises an dem ersten Endgerät G1 kommuniziert werden kann.

Nach Auswertung der Nachricht 314 informiert der zweite Berechtigungssteuerungsserver PCI2 den ersten Berechtigungssteuerungsserver PCI1 hiervon in Form einer Nachricht 324. Nach Auswertung der Nachricht 324 informiert der erste Berechtigungssteuerungsserver PCI1 das erste Endgerät G1 in Form einer Nachricht 315 insbesondere darüber, ob eine Ausgabe des Multimediainhalts C über das zweite Endgerät G2 möglich ist und ob eine Ausgabe eines ersten Sicherheitshinweises an dem ersten Endgerät G1 notwendig ist.

Im vorliegenden Fall wird das erste Endgerät G1 mit der Nachricht 315 dahingehend informiert, dass die Ausgabe des Multimediainhalts C über das zweite Endgerät G2 möglich ist und dass aufgrund des Zustands und der Konfiguration des zweiten Endgeräts G2 die Ausgabe eines ersten Sicherheitshinweises an dem ersten Endgerät G1 erforderlich ist.

Das erste Endgerät G1 gibt hierauf den ersten Sicherheitshinweis in Form einer Ausgabe 316 aus. Die Ausgabe 316 kann insbesondere die Information umfassen, dass die Ausgabe des Multimediainhalts C über das zweite Endgerät G2 möglich ist, ferner kann sie in Abhängigkeit von der Zugriffsberechtigung der Persönlichen Identifikationsnummer des Nutzers des ersten Endgeräts G1 Statusinformationen über das zweite Endgerät G2 enthalten.

Durch eine Eingabe 317 an dem ersten Endgerät G1 gibt der Nutzer des ersten Endgeräts G1 eine bestätigende Quittung auf den ersten Sicherheitshinweis. Dies führt zur Information des ersten Berechtigungssteuerungsservers PCI1 vermittels einer Nachricht 318. Mit Erhalt der Nachricht 318 informiert der erste Berechtigungssteuerungsserver PCI1 den zweiten Berechtigungssteuerungsserver PCI2 hiervon mittels einer Nachricht 325. Mit Erhalt der Nachricht 325 informiert der zweite Berechtigungssteuerungsserver PCI2 das zweite Endgerät G2 über eine Nachricht 319 davon, dass die Ausgabe des Multimediainhalts C über das zweite Endgerät G2 bestätigt ist und erfolgen soll.

Aufgrund des Erhalts der Nachricht 319 verschafft sich das zweite Endgerät G2 die für den Zugriff auf den Multimediainhalt C erforderliche Zugriffsinformation, sofern diese noch nicht oder nicht vollständig vorhanden ist. Da der Multimediainhalt C sofort verfügbar und gemäß der zweiten Anforderung ein schnellstmöglicher Beginn der Ausgabe über das zweite Endgerät G2 gewünscht ist, verlangt das zweite Endgerät G2 sofortigen Zugriff auf den Multimediainhalt C in Form einer Nachricht 320. Diese kann beispielsweise eine Anforderung des Multimediainhalts C von einem VoD Server, einem PVR Server, einem TV Headend zur Einspeisung von Fernsehprogrammen in das zweite Dienstanbieternetz 399 sein oder ein IGMP Kommando zum Beitritt des zweiten Endgeräts G2 zu einer Multicast Gruppe, über die der Multimediainhalt C bereitgestellt wird. Dies führt zur Bereitstellung des Multimediainhalts C für das zweite Endgerät G2 in Form einer Kommunikationsbeziehung 321, welche eine Bereitstellung per Streaming beispielsweise über das RTSP Protokoll oder jede andere Bereitstellung in Form eines Ladens mit einem geeigneten Protokoll wie beispielsweise UDP, TCP, RTP, FTP oder eine Mischung aus den genannten Bereitstellungsarten umfassen kann.

Mit Verfügbarkeit des Multimediainhalts C oder eines Teils davon in dem zweiten Endgerät G2 erfolgt eine Ausgabe 322 des Multimediainhalts C über das zweite Endgerät G2.

Ist der Multimediainhalt C ein Video auf Anforderung, so kann die zweite Anforderung in Form der Nachricht 312 eine Zeitinformation umfassen, welche den bereits über das erste Endgerät G1 ausgespielten Teil des Video auf Anforderung bestimmt. Diese Zeitinformation kann in Form der Nachrichten 323 und 313 an das zweite Endgerät G2 übertragen werden, welches die Zeitinformation als Teil der Nachricht 320 bereitstellen kann. Dies hat zur Folge, dass mittels der Kommunikationsbeziehung 321 das Video auf Anforderung ab einer durch die Zeitinformation bestimmten relativen Zeit bereitgestellt wird, wodurch das Video auf Anforderung ab der Stelle über das zweite Endgerät G2 ausgegeben wird, an der die zweite Anforderung über das erste Endgerät G1 bereitgestellt wurde. Das Video auf Anforderung wird also nicht von Beginn ausgegeben, sondern an der Stelle der Anforderung zur Ausgabe über das zweite Endgerät G2 fortgesetzt.

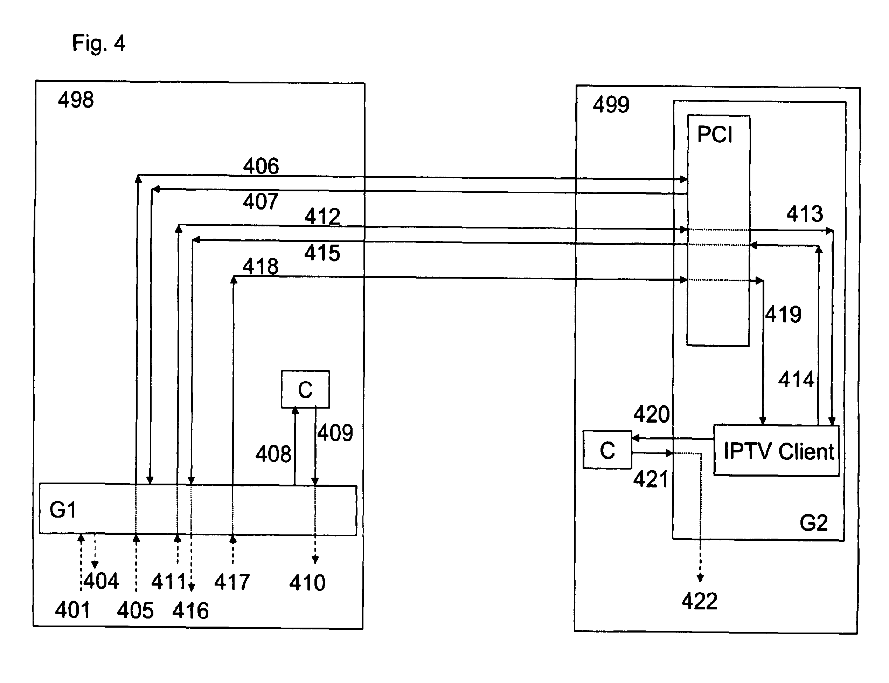

**Fig.4** zeigt eine Ausgabe eines Multimediainhalts C unter Mitwirkung eines dezentralen Berechtigungssteuerungsservers PCI. Der Berechtigungssteuerungsserver PCI ist hierbei eine dezentrale Funktion eines der Endgeräte einer Familie oder Benutzergruppe. Er ermöglicht eine Interkommunikation eines ersten Endgeräts G1 eines ersten Dienstanbieternetzes 498, welches eine erste Netzlösung zur Bereitstellung von Multimediainhalten für das erste Endgerät G1 zur Verfügung stellt, und eines zweiten Endgeräts G2 eines zweiten Dienstanbieternetzes 499, welches eine zweite Netzlösung zur Bereitstellung von Multimediainhalten für das zweite Endgerät G2 zur Verfügung stellt. Zur Kommunikation mit dem Berechtigungssteuerungsserver PCI besitzen das erste Endgerät G1 und das zweite Endgerät G2 jeweils Client-Funktionalität, welche vorzugsweise in Software realisiert sein kann. Vorteilhaft kann der Berechtigungssteuerungsserver PCI beispielsweise auf einer hinreichend leistungsfähigen Set Top Box des zweiten Dienstanbieternetzes 499 zur Ausführung kommen, wobei der Berechtigungssteuerungsserver PCI nur für die Endgeräte einer Familie oder Benutzergruppe tätig wird. Somit ergibt sich der Vorteil, dass keine zentralen Berechtigungssteuerungsserver erforderlich werden.

Funktionen des Berechtigungssteuerungsservers PCI können eine Unterstützung einer das erste und das zweite Dienstanbieternetz umfassenden Verwaltung von Zugriffsrechten der elterlichen Zugriffssteuerung auf Multimediainhalte und von Zugriffsberechtigungsinformationen einer Familie oder Benutzergruppe betreffen. Dies ermöglicht beispielsweise die Verfügbarkeit gleicher Berechtigungsinformationen für die Familie oder Benutzergruppe im ersten und im zweiten Dienstanbieternetz.

Durch eine Eingabe 401 an dem ersten Endgerät G1 gibt ein Nutzer des ersten Endgeräts G1 dem ersten Dienstanbieternetz 498 Kenntnis davon, dass er eine Ausgabe des Multimediainhalts C wünscht.

Das erste Endgerät G1 bewertet die Eingabe 401 und ermittelt, dass der Multimediainhalt C ein klassifizierter Inhalt ist, dessen Ausgabe den Nachweis einer entsprechenden Berechtigung erfordert. Daher gibt das erste Endgerät G1 eine Eingabeanforderung 404 für eine Persönliche Identifikationsnummer des Nutzers des ersten Endgeräts G1 aus. Durch eine Eingabe 405 an dem ersten Endgerät G1 gibt der Nutzer des ersten Endgeräts G1 daraufhin seine Persönliche Identifikationsnummer PIN1 ein.

In Form einer Nachricht 406 stellt das erste Endgerät G1 daraufhin dem Berechtigungssteuerungsserver PCI eine erste Anforderung des Multimediainhalts C für eine Ausgabe des Multimediainhalts C über das erste Endgerät G1 bereit. Die Nachricht 406 enthält die Persönliche Identifikationsnummer PIN1.

Der Berechtigungssteuerungsserver PCI überprüft nach Erhalt der Nachricht 406, dass die Ausgabe des Multimediainhalts C gemäß der ersten Anforderung berechtigt ist. Hierzu ermittelt der Berechtigungssteuerungsserver PCI anhand der Persönlichen Identifikationsnummer PIN1, ob der Nutzer des Endgeräts G1 auf die Klasse klassifizierter Multimediainhalte, der der Multimediainhalt C zugeordnet ist, Zugriffsberechtigung besitzt. Dies ist gemäß dem vorliegenden Beispiel der Fall, womit der Berechtigungssteuerungsserver PCI dem ersten Endgerät G1 in Form einer Nachricht 407 mitteilt, dass eine Zugriffsberechtigung des Nutzers des ersten Endgeräts G1 auf den Multimediainhalt C besteht. Die Nachricht 407 kann zusätzlich Zugriffsinformation für den Multimediainhalt C umfassen, beispielsweise eine Adresse eines VoD-Servers oder eine Multicast-Adresse, von dem das erste Endgerät G1 den Multimediainhalt C beziehen kann.

Aufgrund des Erhalts der Nachricht 407 verschafft sich das erste Endgerät G1 die für den Zugriff auf den Multimediainhalt C erforderliche Zugriffsinformation, sofern diese noch nicht oder nicht vollständig vorhanden ist. Im vorliegenden Falle ist der Multimediainhalt C sofort verfügbar als bereits laufendes Fernsehprogramm. Daher verlangt das erste Endgerät G1 sofortigen Zugriff auf den Multimediainhalt C in Form einer Nachricht 408. Diese kann beispielsweise ein IGMP Kommando zum Beitritt des ersten Endgeräts G1 zu einer Multicast Gruppe sein, für die der Multimediainhalt C bereitgestellt wird. Dies führt zur Bereitstellung des Multimediainhalts C für das erste Endgerät G1 in Form der Kommunikationsbeziehung 409, welche beispielsweise eine Bereitstellung per Streaming über das RTSP Protokoll umfassen kann.

Mit Verfügbarkeit des Multimediainhalts C oder eines ausreichenden Teils davon in dem ersten Endgerät G1 erfolgt eine Ausgabe 410 des Multimediainhalts C über das erste Endgerät G1.

Durch eine Eingabe 411 an dem ersten Endgerät G1 gibt der Nutzer des ersten Endgeräts G1 dem ersten Dienstanbieternetz 498 Kenntnis davon, dass er die Ausgabe des laufenden Multimediainhalts C über das zweite Endgerät G2 zu einem späteren Zeitpunkt T wünscht. In Form einer Nachricht 412 stellt das erste Endgerät G1 daraufhin dem Berechtigungssteuerungsserver PCI eine zweite Anforderung des Multimediainhalts C für eine Ausgabe des Multimediainhalts C über das zweite Endgerät G2 ab dem Zeitpunkt T bereit. Der Berechtigungssteuerungsserver PCI, welcher auf dem zweiten Endgerät G2 implementiert ist, informiert einen IPTV Client des zweiten Endgeräts G2 hiervon in Form einer Nachricht 413. Der IPTV Client des zweiten Endgerät G2 quittiert die Nachricht 413 mit einer Nachricht 414, in welcher eine Bereitschaft zur Ausgabe des Multimediainhalts C zum Zeitpunkt T, eine Statusinformation des zweiten Endgeräts G2 oder/und eine Anforderung zur Ausgabe eines ersten Sicherheitshinweises an dem ersten Endgerät G1 kommuniziert werden kann.

Nach Auswertung der Nachricht 414 informiert der Berechtigungssteuerungsserver PCI das erste Endgerät G1 in Form einer Nachricht 415 darüber, dass eine Ausgabe des Multimediainhalts C über das zweite Endgerät G2 zum Zeitpunkt T möglich ist und dass aufgrund des Zustands und der Konfiguration des zweiten Endgeräts G2 keine Ausgabe des ersten Sicherheitshinweises an dem ersten Endgerät G1 notwendig ist.

Daraufhin überprüft das erste Endgerät G1 seine Konfiguration und stellt fest, dass der Nutzer des ersten Endgeräts G1 festgelegt hat, einen unbedingten ersten Sicherheitshinweis aufgrund der zweiten Anforderung zu erhalten, um Fehlbedienung sicher auszuschließen.

Das erste Endgerät G1 gibt hierauf den ersten Sicherheitshinweis in Form einer Ausgabe 416 aus. Die Ausgabe 416 kann insbesondere eine Information umfassen, dass eine Ausgabe des Multimediainhalts C über das zweite Endgerät möglich ist.

Durch eine Eingabe 417 an dem ersten Endgerät G1 gibt der Nutzer des ersten Endgeräts G1 eine bestätigende Quittung auf den ersten Sicherheitshinweis. Dies führt zur Information des Berechtigungssteuerungsservers PCI vermittels einer Nachricht 418. Mit Erhalt der Nachricht 418 informiert der Berechtigungssteuerungsserver PCI den IPTV Client des zweiten Endgeräts G2 über eine Nachricht 419 davon, dass die Ausgabe des Multimediainhalts C über das zweite Endgerät G2 bestätigt ist und erfolgen soll.

Aufgrund des Erhalts der Nachricht 419 verschafft sich das zweite Endgerät G2 die für den Zugriff auf den Multimediainhalt C erforderliche Zugriffsinformation, sofern diese noch nicht oder nicht vollständig vorhanden ist. Da der Zeitpunkt T noch nicht erreicht ist, setzt der IPTV Client des zweiten Endgeräts G2 sich ein entsprechendes Zeitglied und initiiert mit Ablauf des Zeitglieds rechtzeitig eine Ausgabe 422 des Multimediainhalts C durch Bereitstellung einer Nachricht 420.

Der IPTV Client des zweiten Endgeräts G2 verlangt in Form der Nachricht 420 sofortigen Zugriff auf den Multimediainhalt C. Diese kann beispielsweise ein IGMP Kommando sein zum Beitritt des zweiten Endgeräts G2 zu einer Multicast Gruppe, über die der Multimediainhalt C bereitgestellt wird. Dies führt zur Bereitstellung des Multimediainhalts C für das zweite Endgerät G2 in Form einer Kommunikationsbeziehung 421, welche eine Bereitstellung per Streaming beispielsweise über das RTSP Protokoll umfassen kann.

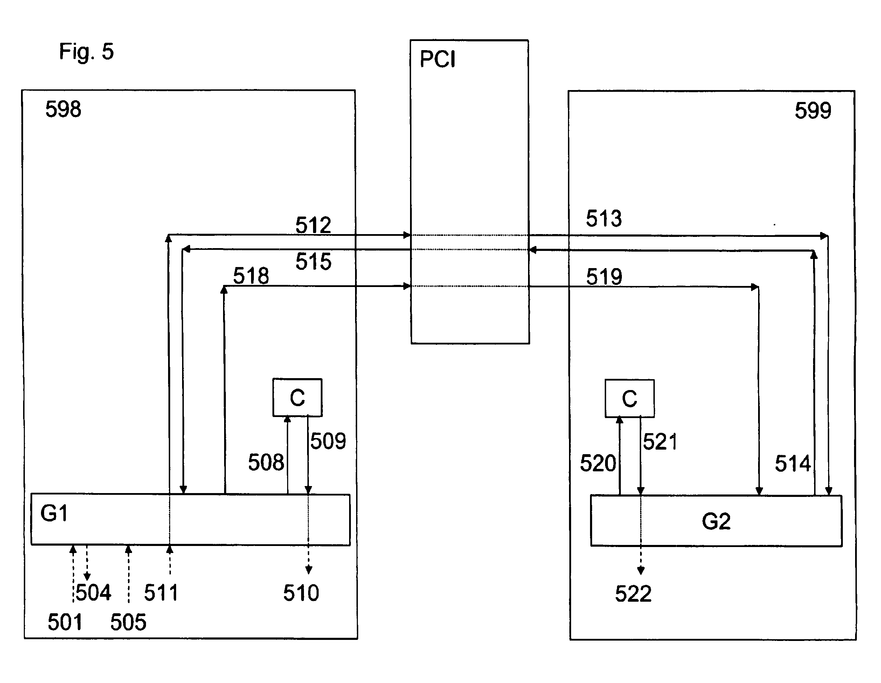

**Fig.5** zeigt eine Ausgabe eines Multimediainhalts C nach lokaler Prüfung einer Zugriffsberechtigung. Ein Berechtigungssteuerungsserver PCI ist hierbei eine zentrale Einrichtung und ermöglicht eine Interkommunikation eines ersten Dienstanbieternetzes 598, welches eine erste Netzlösung zur Bereitstellung von Multimediainhalten für ein erstes Endgerät G1 zur Verfügung stellt, und eines zweiten Dienstanbieternetzes 599, welches eine zweite Netzlösung zur Bereitstellung von Multimediainhalten für ein zweites Endgerät G2 zur Verfügung stellt. Insbesondere ermöglicht der Berechtigungssteuerungsserver PCI die Kommunikation zwischen dem ersten Endgerät G1 und dem zweiten Endgerät G2.

Durch eine Eingabe 501 an dem ersten Endgerät G1 gibt ein Nutzer des ersten Endgeräts G1 dem ersten Dienstanbieternetz 598 Kenntnis davon, dass er eine Ausgabe des Multimediainhalts C wünscht.

Das erste Endgerät G1 bewertet die Eingabe 501 und ermittelt, dass der Multimediainhalt C ein klassifizierter Inhalt ist, dessen Ausgabe den Nachweis einer entsprechenden Berechtigung erfordert. Daher gibt das erste Endgerät G1 eine Eingabeanforderung 504 für eine Persönliche Identifikationsnummer des Nutzers des ersten Endgeräts G1 aus.

Durch eine Eingabe 505 an dem ersten Endgerät G1 gibt der Nutzer des ersten Endgeräts G1 daraufhin seine Persönliche Identifikationsnummer PIN1 ein. Das erste Endgerät G1 überprüft hiermit, dass die Ausgabe des Multimediainhalts C gemäß der Eingabe 501 berechtigt ist. Hierzu ermittelt das erste Endgerät G1 anhand der Persönlichen Identifikationsnummer PIN1, ob der Nutzer des Endgeräts G1 auf die Klasse klassifizierter Multimediainhalte, der der Multimediainhalt C zugeordnet ist, Zugriffsberechtigung besitzt. Dies ist im vorliegenden Beispiel der Fall, worauf sich das erste Endgerät G1 die für den Zugriff auf den Multimediainhalt C erforderliche Zugriffsinformation, sofern diese noch nicht oder nicht vollständig vorhanden ist, verschafft.

In Form einer Nachricht 508 stellt das erste Endgerät G1 eine erste Anforderung des Multimediainhalts C für eine Ausgabe des Multimediainhalts C über das erste Endgerät bereit. Die Nachricht 508 kann beispielsweise eine Anforderung des Multimediainhalts C von einem VoD Server sein oder ein IGMP Kommando zum Beitritt des ersten Endgeräts G1 zu einer Multicast Gruppe, über die der Multimediainhalt C bereitgestellt wird. Dies führt zur Bereitstellung des Multimediainhalts C für das erste Endgerät G1 in Form einer Kommunikationsbeziehung 509, welche eine Bereitstellung per Streaming beispielsweise über das RTSP Protokoll umfassen kann.

Mit Verfügbarkeit des Multimediainhalts C oder eines Teils davon in dem Endgerät G1 erfolgt eine Ausgabe 510 des Multimediainhalts C über das erste Endgerät G1.

Durch eine Eingabe 511 an dem ersten Endgerät G1 gibt der Nutzer des ersten Endgeräts G1 dem ersten Dienstanbieternetz 598 Kenntnis davon, dass er die Ausgabe des laufenden Multimediainhalts C über das zweite Endgerät G2 wünscht. In Form einer Nachricht 512 stellt das erste Endgerät G1 daraufhin dem Berechtigungssteuerungsserver PCI eine zweite Anforderung des Multimediainhalts C für eine Ausgabe des Multimediainhalts C über das zweite Endgerät G2 bereit. Der Berechtigungssteuerungsserver PCI informiert das zweite Endgerät G2 hiervon in Form einer Nachricht 513. Das zweite Endgerät G2 quittiert die Nachricht 513 mit einer Nachricht 514, in welcher beispielsweise eine Bereitschaft zur Ausgabe des Multimediainhalts C und/oder eine Statusinformation des zweiten Endgeräts G2 kommuniziert werden kann.

Nach Auswertung der Nachricht 514 informiert der Berechtigungssteuerungsserver PCI das erste Endgerät G1 in Form einer Nachricht 515 darüber, dass die Ausgabe des Multimediainhalts C über das zweite Endgerät G2 möglich ist und dass aufgrund des Zustands und der Konfiguration des zweiten Endgeräts G2 die Ausgabe eines ersten Sicherheitshinweises an dem ersten Endgerät G1 nicht erforderlich ist. Daraufhin überprüft das erste Endgerät G1 seine Konfiguration und stellt fest, dass der Nutzer des ersten Endgeräts G1 nicht festgelegt hat, einen unbedingten ersten Sicherheitshinweis aufgrund der zweiten Anforderung zu erhalten.

Das erste Endgerät G1 gibt hierauf keinen ersten Sicherheitshinweis aus und quittiert die Nachricht 515 mit einer Nachricht 518.

Mit Erhalt der Nachricht 518 informiert der Berechtigungssteuerungsserver PCI das zweite Endgerät G2 über eine Nachricht 519 davon, dass die Ausgabe des Multimediainhalts C über das zweite Endgerät G2 bestätigt ist und erfolgen soll.

Aufgrund des Erhalts der Nachricht 519 verschafft sich das zweite Endgerät G2 die für den Zugriff auf den Multimediainhalt C erforderliche Zugriffsinformation, sofern diese noch nicht oder nicht vollständig vorhanden ist. Da der Multimediainhalt C im vorliegenden Beispiel sofort verfügbar ist, verlangt das zweite Endgerät G2 sofortigen Zugriff auf den Multimediainhalt C in Form einer Nachricht 520. Diese kann beispielsweise eine Anforderung des Multimediainhalts C von einem VoD Server sein oder ein IGMP Kommando zum Beitritt des zweiten Endgeräts G2 zu einer Multicast Gruppe, über die der Multimediainhalt C bereitgestellt wird. Dies führt zur Bereitstellung des Multimediainhalts C für das zweite Endgerät G2 in Form einer Kommunikationsbeziehung 521, welche eine Bereitstellung per Streaming beispielsweise über das RTSP Protokoll umfassen kann.

Mit Verfügbarkeit des Multimediainhalts C oder eines für eine Ausgabe hinreichenden Teils davon in dem zweiten Endgerät G2 erfolgt eine Ausgabe 522 des Multimediainhalts C über das zweite Endgerät G2.

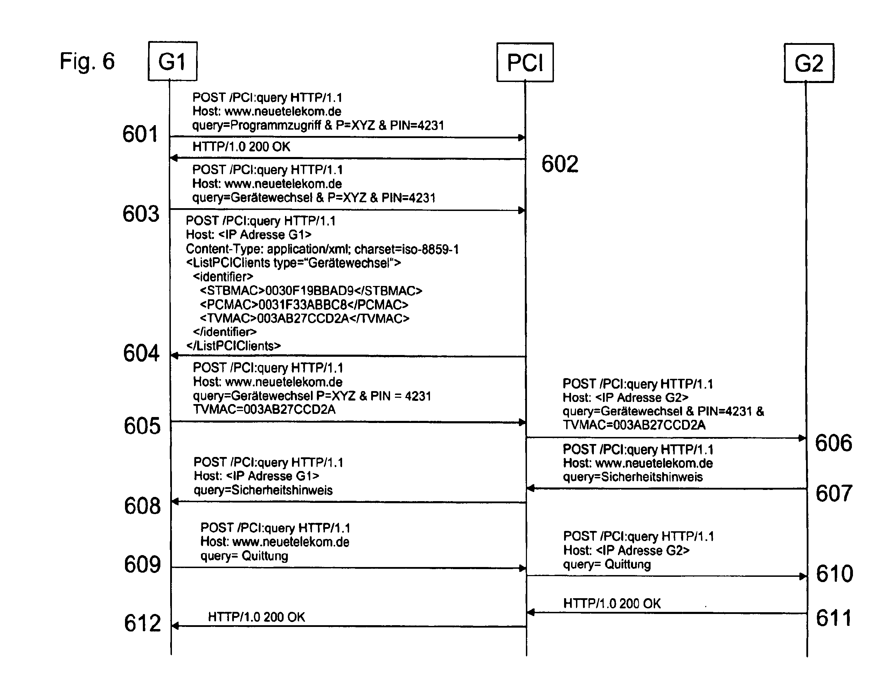

**Fig.6** zeigt einen auf dem HTTP Protokoll beruhenden Nachrichtenfluss für einen Wechsel einer Ausgabe eines klassifizierten Multimediainhalts C von einem ersten Endgerät G1 auf ein zweites Endgerät G2. Mit einer ersten Protokollnachricht 601 stellt das erste Endgerät G1 einem Berechtigungssteuerungsserver PCI eine erste Anforderung für einen Programmzugriff auf das Programm XYZ bereit. Die Protokollnachricht enthält bereits eine Berechtigungsinformation PIN. Nach Überprüfung, dass die Ausgabe des Programms XYZ berechtigt ist, gibt der Berechtigungssteuerungsserver PCI mittels einer Protokollnachricht 602 dem ersten Endgerät G1 eine positive Quittung. Hierauf wird die Ausgabe des Programms XYZ über das erste Endgerät G1 vorgenommen. Während die Ausgabe des Programms XYZ über das erste Endgerät G1 erfolgt, stellt das erste Endgerät G1 dem Berechtigungssteuerungsserver PCI eine zweite Anforderung für die Ausgabe des Programms XYZ über ein anderes Endgerät mittels einer Protokollnachricht 603 zur Verfügung. Die Protokollnachricht 603 enthält die Information, dass der Ausgabewechsel für das Programm XYZ gewünscht ist, und sie enthält optional die erste Berechtigungsinformation PIN, sie enthält jedoch keine Information über das zweite Endgerät G2, über das die weitere Ausgabe des Programms XYZ gefordert ist. Nach Auswertung der Protokollnachricht 603 antwortet der Berechtigungssteuerungsserver PCI mit einer Protokollnachricht 604, welche eine Liste von verfügbaren, über ihre MAC Adressen identifizierbaren zweiten Endgeräten enthält, für welche eine Ausgabe des Programms XYZ angefordert werden kann. Hierauf wird dem Nutzer des ersten Endgeräts G1 eine Liste der verfügbaren zweiten Endgeräte zur Auswahl ausgegeben. Aus dieser Liste wählt der Nutzer des ersten Endgeräts G1 das heimische Fernsehgerät aus, welches durch die MAC Adresse TVMAC identifiziert ist. Mittels einer Protokollnachricht 605 wird die Auswahl des zweiten Endgeräts G2 dem Berechtigungssteuerungsserver PCI zur Verfügung gestellt. Die Protokollnachricht 605 enthält die Information, dass der Ausgabewechsel für das Programm XYZ gewünscht ist, die erste Berechtigungsinformation PIN sowie insbesondere die MAC Adresse TVMAC des für die Ausgabe bestimmten Fernsehgeräts. Der Berechtigungssteuerungsserver PCI leitet diese Informationen in Form einer Protokollnachricht 606 an das zweite Endgerät G2 weiter, nachdem er die IP Adresse des zweiten Endgeräts G2 ermittelt hat. Das zweite Endgerät G2 beantwortet die Ausgabeanforderung 606 mit der Anforderung einer Ausgabe eines ersten Sicherheitshinweises über das erste Endgerät G1 mit Hilfe einer Protokollnachricht 607, welche das zweite Endgerät G2 dem Berechtigungssteuerungsserver PCI zur Verfügung stellt. Mit Erhalt der Protokollnachricht 607 stellt der Berechtigungssteuerungsserver PCI eine Anforderung für die Ausgabe des ersten Sicherheitshinweises an das erste Endgerät G1 in Form einer Protokollnachricht 608. Nach Erhalt der Protokollnachricht 608 gibt das erste Endgerät G1 den ersten Sicherheitshinweis aus zusammen mit einer Eingabeaufforderung für eine bestätigende Quittung. Der Nutzer des ersten Endgeräts G1 gibt hierauf die bestätigende Quittung ein beispielsweise durch Drücken eines OK-Knopfes des ersten Endgeräts G1. Hiervon informiert das erste Endgerät G1 den Berechtigungssteuerungsserver PCI mit Hilfe einer Protokollnachricht 609. Mit Erhalt der Protokollnachricht 609 informiert der Berechtigungssteuerungsserver PCI das zweite Endgerät G2 über das Vorliegen der bestätigenden Quittung mit Hilfe einer Protokollnachricht 610. Das zweite Endgerät G2 führt hierauf für die Ausgabe des Programms XYZ notwendigen Schritte durch und quittiert dem Berechtigungssteuerungsserver PCI eine erfolgreiche Ausführung positiv mit einer Protokollnachricht 611. Mit Erhalt der Protokollnachricht 611 informiert der Berechtigungssteuerungsserver PCI das erste Endgerät G1 über die erfolgreiche Ausgabe des Programms XYZ über das zweite Endgerät G2 mit einer Protokollnachricht 612.

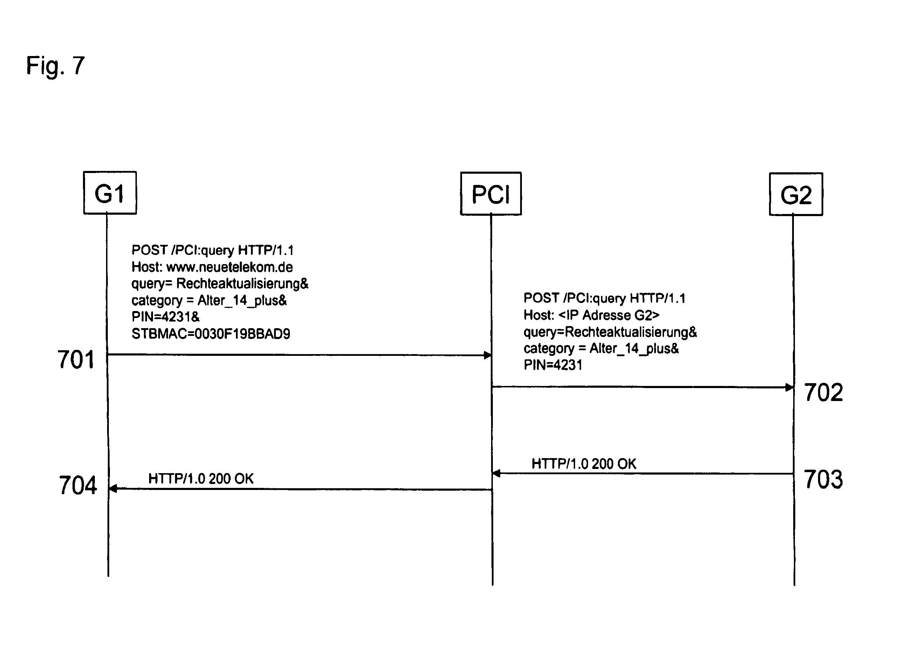

**Fig.7** zeigt einen auf dem HTTP Protokoll beruhenden Nachrichtenfluss für eine Aktualisierung von Zugriffsrechten über einen Berechtigungssteuerungsserver PCI. Eine Aktualisierung von Zugriffsrechten kann nur erfolgen, falls hierfür eine Berechtigung vorhanden ist. Dies ist insbesondere der Fall, wenn eine Master-Berechtigungsinformation beispielsweise über ein erstes Endgerät G1 eingegeben wurde. Nach entsprechender Eingabe des Nutzers des ersten Endgeräts G1 stellt das erste Endgerät G1 mittels einer Protokollnachricht 701 dem Berechtigungssteuerungsserver PCI eine Anforderung zur Aktualisierung der mit einer Persönlichen Identifikationsnummer PIN verknüpften Zugriffsrechte bereit. Die Protokollnachricht umfasst eine Kategorieinformation, eine Persönliche Identifikationsnummer PIN und eine MAC Adresse eines zweiten Endgeräts G2. Mit Erhalt der Protokollnachricht 701 ermittelt der Berechtigungssteuerungsserver PCI die IP Adresse des zweiten Endgeräts G2, speichert den Inhalt der Protokollnachricht 701 optional lokal und sendet dem zweiten Endgerät G2 eine Protokollnachricht 702, welche das zweite Endgerät G2 informiert, dass eine Aktualisierung von Zugriffsrechten erforderlich ist. Mit Erhalt der Protokollnachricht 702 veranlasst das zweite Endgerät G2, dass zukünftig auf klassifizierten Multimediainhalt, dessen Ausgabe ein Mindestalter von 14 Jahren erfordert, mit der Persönlichen Identifikationsnummer "4231" zugegriffen werden kann. Die Umsetzung der mit der Protokollnachricht 702 erhaltenen Anforderung quittiert das zweite Endgerät G2 dem Berechtigungssteuerungsserver PCI positiv mittels einer Protokollnachricht 703. Mit Erhalt der Protokollnachricht 703 quittiert der Berechtigungssteuerungsserver PCI dem ersten Endgerät G1 mit einer Protokollnachricht 704 die Umsetzung der mit der Protokollnachricht 701 gestellten Anforderung positiv. Das erste Endgerät G1 kann den Erhalt der Protokollnachricht 704 zur Ausgabe einer Vollzugsmeldung nutzen.

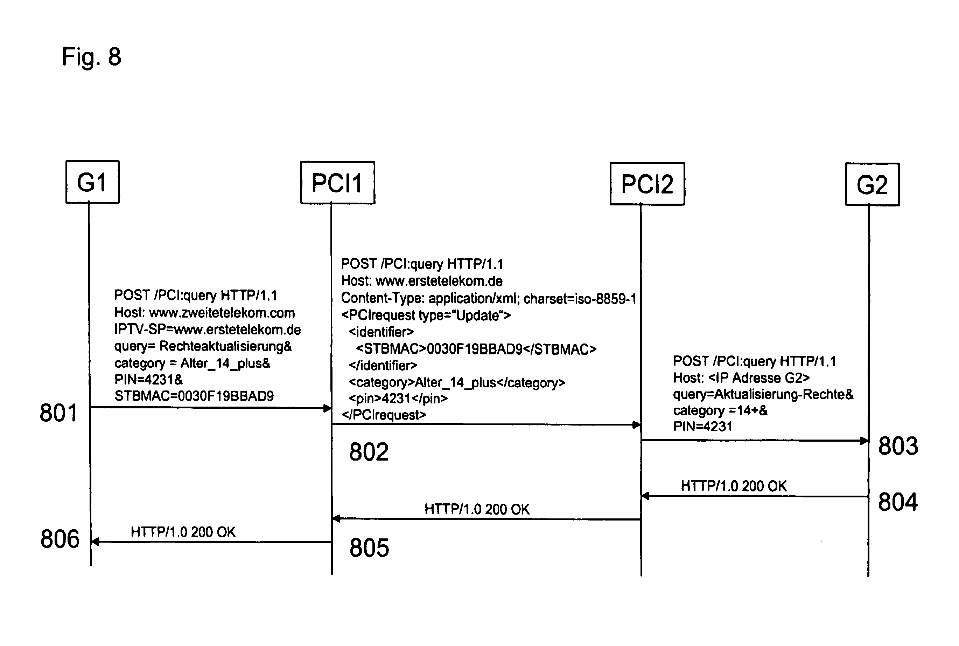

**Fig. 8** zeigt einen auf dem HTTP Protokoll beruhenden Nachrichtenfluss für eine Aktualisierung von Zugriffsrechten über zwei Berechtigungssteuerungsserver PCI1, PCI2. Eine Aktualisierung von Zugriffsrechten kann nur erfolgen, falls hierfür eine Berechtigung vorhanden ist. Dies ist insbesondere der Fall, wenn eine Master-Berechtigungsinformation beispielsweise über ein erstes Endgerät G1 eingegeben wurde. Nach entsprechender Eingabe des Nutzers des ersten Endgeräts G1 stellt das erste Endgerät G1 dem ersten Berechtigungssteuerungsserver PCI1 mittels einer Protokollnachricht 801 eine Anforderung zur Aktualisierung der mit einer Persönlichen Identifikationsnummer PIN verknüpften Zugriffsrechte bereit. Die Protokollnachricht umfasst eine Kategorieinformation, eine PIN und eine MAC Adresse eines zweiten Endgeräts G2, ferner insbesondere eine Adressinformation eines zweiten Dienstanbieternetzes IPTV. Mit Erhalt der Protokollnachricht 801 ermittelt der erste Berechtigungssteuerungsserver PCI1, dass das zweite Dienstanbieternetz IPTV mit einem XML Dialekt über HTTP zu informieren ist und übersetzt den Inhalt der Protokollnachricht 801 in diesen XML Dialekt, speichert den Inhalt der Protokollnachricht 801 und/oder die Transformation nach XML optional lokal und sendet dem zweiten Berechtigungssteuerungsserver PCI2 die nach XML transformierte Information in Form einer Protokollnachricht 802. Da das zweite Dienstanbieternetz IPTV das XML-Format intern nicht benutzt, übersetzt der zweite Berechtigungssteuerungsserver PCI2 die Protokollnachricht 802 in eine im zweiten Dienstanbieternetz IPTV verwendete HTTP Protokollnachricht 803, welche das zweite Endgerät G2 davon informiert, dass eine Aktualisierung von Zugriffsrechten erforderlich ist. Nachdem der zweite Berechtigungssteuerungsserver PCI2 die IP Adresse des zweiten Endgeräts ermittelt hat, stellt er die Protokollnachricht 803 dem zweiten Endgerät G2 bereit. Mit Erhalt der Protokollnachricht 803 veranlasst das zweite Endgerät G2, dass zukünftig auf klassifizierten Multimediainhalt, dessen Ausgabe ein Mindestalter von 14 Jahren erfordert, mit der Persönlichen Identifikationsnummer "4231" zugegriffen werden kann. Die Umsetzung der mit der Protokollnachricht 803 erhaltenen Anforderung quittiert das zweite Endgerät G2 dem zweiten Berechtigungssteuerungsserver PCI2 positiv mittels einer Protokollnachricht 804. Mit Erhalt der Protokollnachricht 804 quittiert der zweite Berechtigungssteuerungsserver PCI2 mittels einer Protokollnachricht 805 dem ersten Berechtigungssteuerungsserver die Ausführung der Anforderung gemäß der Protokollnachricht 802 positiv. Mit Erhalt der Protokollnachricht 805 quittiert der erste Berechtigungssteuerungsserver PCI1 dem ersten Endgerät G1 mit einer Protokollnachricht 806 die Umsetzung der mit der Protokollnachricht 801 gestellten Anforderung positiv. Das erste Endgerät G1 kann den Erhalt der Protokollnachricht 806 zur Ausgabe einer Meldung einer erfolgreichen Ausführung der Aktualisierung von Zugriffsrechten nutzen.

Wird zum Zeitpunkt der Aktualisierung der Zugriffsrechte ein Multimediainhalt über das zweite Endgerät G2 ausgegeben, so kann das zweite Endgerät G2 die Berechtigung der Ausgabe im Hinblick auf die Aktualisierung der Zugriffsrechte sofort überprüfen. Wird beispielsweise ein Multimediainhalt ausgegeben, welcher ein Mindestalter von 14 Jahren erfordert, und ist noch keine persönliche Identifikationsnummer eingegeben worden, so kann der Abbruch der Ausgabe und/oder eine Aufforderung zur Eingabe einer persönlichen Identifikationsnummer beispielsweise durch Steuerung des zweiten Endgeräts G2 bewirkt werden.

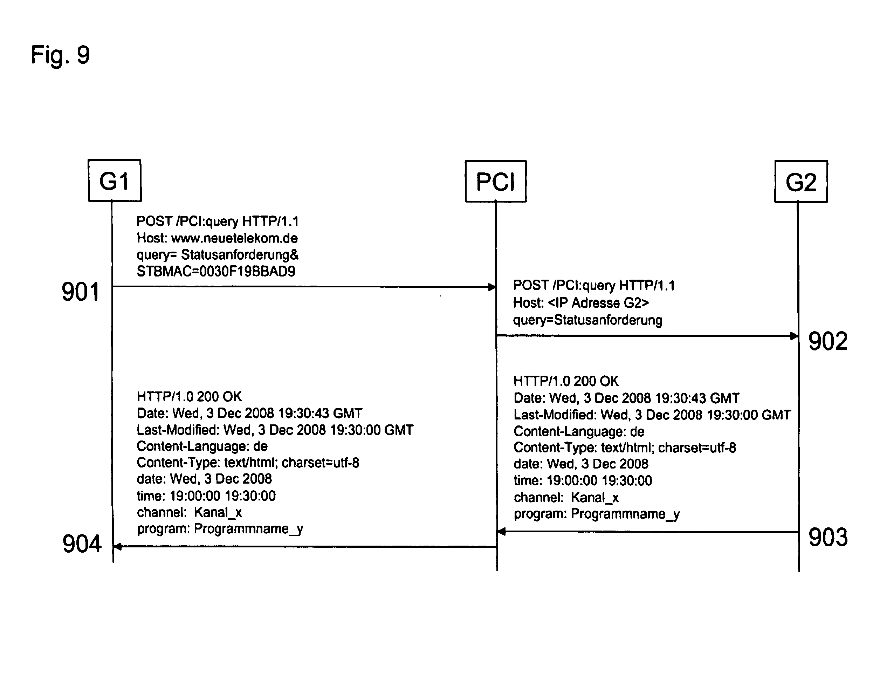

**Fig.9** zeigt einen auf dem HTTP Protokoll beruhenden Nachrichtenfluss für eine Statusabfrage über einen Berechtigungssteuerungsserver PCI. Eine Client Funktion des Berechtigungssteuerungsservers PCI auf einem ersten Endgerät G1, z. B. einem mobilen Telefon, kann als HTML Browser implementiert sein. Über HTTP Eingabemasken kann ein Nutzer des ersten Endgeräts G1 Eingaben machen, die beispielsweise ein zweites Endgerät G2 identifizieren. Eine solche Identifizierung kann zum Beispiel eine MAC Adresse, eine Rufnummer eines Festnetzes oder ein symbolischer Name, welcher das zweite Endgerät G1 eindeutig identifiziert, sein. Eine Identifizierungsinformation für das zweite Endgerät G2, z. B. eine STB einer Familie, kann über das erste Endgerät G1 bei Bedarf eingegeben werden, aber auch beispielsweise in dem ersten Endgerät G1 für Zwecke der einfachen wiederholten Eingabe abgespeichert werden oder verfügbar sein.

Wünscht der Nutzer des ersten Endgeräts G1 Information darüber, welche Multimediainhalte über das zweite Endgerät G2 zugegriffen und/oder ausgegeben wurden oder gerade ausgegeben werden, dann ruft er eine hierfür vorgesehene Abfragefunktion der Client Funktion auf und stellt dieser beispielsweise die MAC Adresse des zweiten Endgeräts G2 über die Eingabefunktion des ersten Endgeräts G1, ggf. unter Nutzung einer lokalen Speicherung der MAC Adresse des zweiten Endgeräts G2 in dem ersten Endgerät G1, zur Verfügung sowie insbesondere den Nachweis seiner Berechtigung zur Nutzung der Abfragefunktion in Form einer Master-Berechtigungsinformation oder Master-des Nutzers des ersten Endgeräts G1. Die Abfragefunktion der Client Funktion bewirkt hierauf nach Prüfung der Eingabedaten und der Berechtigung des Nutzers des ersten Endgeräts G1, dass das erste Endgerät G1 dem Berechtigungssteuerungsserver PCI eine Protokollnachricht 901 zur Verfügung stellt. Die Protokollnachricht 901 enthält Adressinformation des Berechtigungssteuerungsservers PCI, die MAC Adresse des zweiten Endgeräts G2 und die Information, dass eine Statusanforderung für das zweite Endgerät G2 ausgeführt werden soll. Mit Erhalt der Protokollnachricht 901 ermittelt der Berechtigungssteuerungsserver PCI die IP Adresse des zweiten Endgeräts G2 und informiert das zweite Endgerät G2 mit Hilfe einer Protokollnachricht 902, dass eine Statusanforderung vorliegt.

Mit Erhalt der Protokollnachricht 902 ermittelt das zweite Endgerät G2 beispielsweise die in der unmittelbaren Vergangenheit ausgegebenen Programme mit Programmnamen, Kanalnamen und Zugriffszeitintervallen und stellt dem Berechtigungssteuerungsserver PCI diese Information in Form einer Protokollnachricht 903 zur Verfügung. Im vorliegenden Beispiel besagt die Protokollnachricht 903, dass die Fernsehsendung Programmname_y über das Fernsehprogramm Kanal_x zwischen 19:00h und 19:30h über das zweite Endgerät G2 ausgegeben wurde. Diese Information reicht der Berechtigungssteuerungsserver PCI in Form einer Protokollnachricht 904 gleichen Inhalts weiter an das erste Endgerät G1. Aufgrund des Erhalts der Protokollnachricht 904 gibt das erste Endgerät G1 dem Nutzer des ersten Endgeräts G1 die aufgrund der Statusanforderung erhaltene Information in geeigneter Form aus.

Die Protokollnachrichten 901-904 können alternativ oder zusätzlich mit XML realisiert sein. In entsprechender Weise kann eine Statusanforderung auch erfolgen für einen durch den Nutzer des ersten Endgeräts G1 vorgegebenen Zeitraum. Auch eine zyklische, in festem zeitlichen Raster, z. B. alle 5 Minuten, erfolgende Ausgabe beispielsweise des aktuell auf dem zweiten Endgerät G2 zugegriffen Multimediainhalts kann auf diese Weise vorgenommen werden. Ebenfalls kann eine Statusanforderung mit Information des Nutzers des ersten Endgeräts G1 bei Programmwechsel auf dem zweiten Endgerät G2 erfolgen. Auch ist es möglich, dass das erste Endgerät G1 aufgrund der Protokollnachricht 904 erhaltenen Information ein in der Protokollnachricht 904 angegebenes Programm zur Ausgabe über das erste Endgerät G1 bringt. Stellt der Nutzer des ersten Endgeräts G1, insbesondere ein Elterteil, fest, dass er beispielsweise eine laufende Ausgabe eines Multimediainhalts über das zweite Endgerät G2, welches die Kinder nutzen, nicht wünscht, so kann er diese Ausgabe mit bereits dargestellten Mitteln einer Aktualisierung von Zugriffsrechten unterbinden und ggf. den sofortigen Abbruch der Ausgabe des Multimediainhalts über das zweite Endgerät G2 herbeiführen.

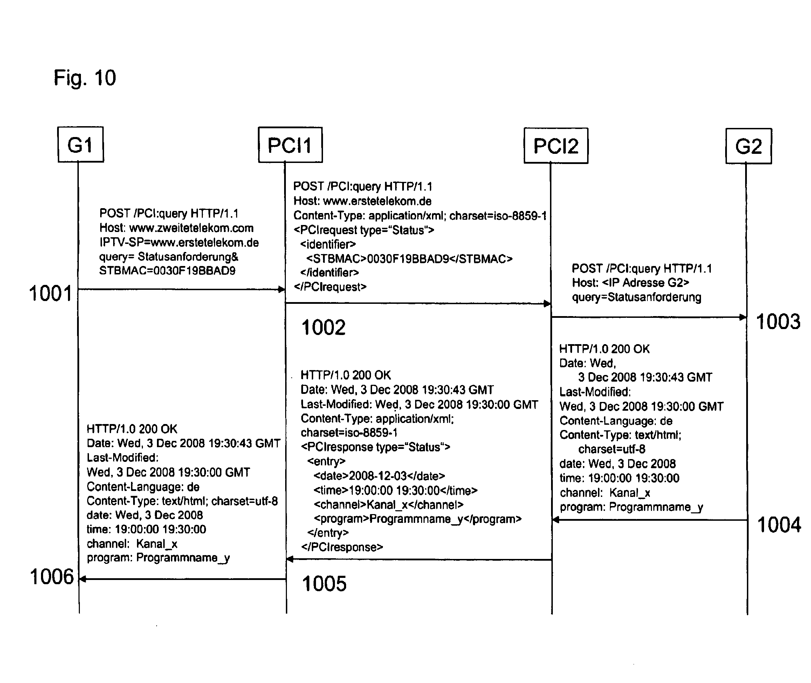

**Fig.10** zeigt einen auf dem HTTP Protokoll beruhenden Nachrichtenfluss für eine Statusabfrage über zwei Berechtigungssteuerungsserver PCI1, PCI2. Eine Client Funktion des ersten Berechtigungssteuerungsservers PCI1 auf einem ersten Endgerät G1, z. B. einem mobilen Telefon, kann als HTML Browser implementiert sein. Über HTTP Eingabemasken kann ein Nutzer des ersten Endgeräts G1 Eingaben machen, die ein zweites Endgerät G2 identifizieren. Eine solche Identifizierung kann beispielsweise eine MAC Adresse sein. Eine Identifizierungsinformation für das zweite Endgerät G2, z. B. eine STB einer Familie, kann über das erste Endgerät G1 bei Bedarf eingegeben werden, aber auch in dem ersten Endgerät G1 für Zwecke der einfachen wiederholten Eingabe abgespeichert sein.

Wünscht der Nutzer des ersten Endgeräts G1 Information darüber, welche Multimediainhalte über das zweite Endgerät G2 zugegriffen und/oder ausgegeben wurden und/oder gerade ausgegeben werden, dann ruft er eine hierfür vorgesehene Abfragefunktion der Client Funktion auf und stellt dieser z. B. die MAC Adresse des zweiten Endgeräts G2 über die Eingabefunktion des ersten Endgeräts, ggf. unter Nutzung einer lokalen Speicherung der MAC Adresse des zweiten Endgeräts G2 in dem ersten Endgerät G1, zur Verfügung sowie insbesondere den Nachweis seiner Berechtigung zur Nutzung der Abfragefunktion in Form einer Master-Berechtigungsinformation des Nutzers des ersten Endgeräts G1. Die Abfragefunktion der Client Funktion bewirkt hierauf nach Prüfung der Eingabedaten und der Berechtigung des Nutzers des ersten Endgeräts G1, dass das erste Endgerät G1 dem ersten Berechtigungssteuerungsserver PCI1 eine Protokollnachricht 1001 zur Verfügung stellt. Die Protokollnachricht 1001 umfasst die MAC Adresse des zweiten Endgeräts G2, ferner insbesondere eine Adressinformation eines zweiten Dienstanbieternetzes IPTV.

Mit Erhalt der Protokollnachricht 1001 ermittelt der erste Berechtigungssteuerungsserver PCI1, dass das zweite Dienstanbieternetz IPTV mit einem XML Dialekt über HTTP zu informieren ist und übersetzt den Inhalt der Protokollnachricht 1001 in diesen XML Dialekt, speichert den Inhalt der Protokollnachricht 1001 und/oder die Transformation nach XML optional lokal und sendet dem zweiten Berechtigungssteuerungsserver PCI2 die nach XML transformierte Information in Form einer Protokollnachricht 1002. Da das zweite Dienstanbieternetz IPTV das XML-Format intern nicht benutzt, übersetzt der zweite Berechtigungssteuerungsserver PCI2 die Protokollnachricht 1002 in eine im zweiten Dienstanbieternetz IPTV verwendete HTTP Protokollnachricht 1003, welche das zweite Endgerät G2 davon informiert, dass eine Statusanforderung für das zweite Endgerät G2 zu beantworten ist. Nachdem der zweite Berechtigungssteuerungsserver PCI2 die IP Adresse des zweiten Endgeräts G2 ermittelt hat, stellt er die Protokollnachricht 1003 dem zweiten Endgerät G2 bereit.

Mit Erhalt der Protokollnachricht 1003 ermittelt das zweite Endgerät G2 beispielsweise die in der unmittelbaren Vergangenheit ausgegebenen Programme mit Programmnamen, Kanalnamen und Zugriffszeitintervallen und stellt dem zweiten Berechtigungssteuerungsserver PCI2 diese Information in Form einer Protokollnachricht 1004 zur Verfügung. Im vorliegenden Beispiel besagt die Protokollnachricht 1004, dass die Fernsehsendung Programmname_y über das Fernsehprogramm Kanal_x zwischen 19:00h und 19:30h über das zweite Endgerät G2 ausgegeben wurde.

Mit Erhalt der Protokollnachricht 1004 übersetzt der zweite Berechtigungssteuerungsserver PCI2 den Inhalt der Protokollnachricht 1004 nach XML und stellt die Übersetzung mittels einer Protokollnachricht 1005 dem ersten Berechtigungssteuerungsserver PCI1 zur Verfügung. Da das erste Endgerät G1 das XML-Format der Protokollnachricht 1005 nicht benutzt, übersetzt der erste Berechtigungssteuerungsserver PCI1 die Protokollnachricht 1005 in eine für das erste Endgerät G1 geeignete Protokollnachricht 1006 gleichen Inhalts und stellt diese dem ersten Endgerät G1 zur Verfügung.

Aufgrund des Erhalts der Protokollnachricht 1006 gibt das erste Endgerät G1 dem Nutzer des ersten Endgeräts G1 die aufgrund der Statusanforderung erhaltene Information in geeigneter Form aus.

### Abkürzungsliste

- DSL: Digital Subscriber Line
- DTV: Digital Television
- DVB: Digital Video Broadcasting
- DVB-H: Digital Video Broadcasting- Handhelds
- EPG: Electronic Program Guide
- ESG: Electronic Service Guide
- FTP: File Transfer Protocol
- GW: Gateway
- HDTV: High Definition Television
- HTML: Hypertext Markup Language
- HTTP: Hypertext Transfer Protocol
- IGMP: Internet Group Management Protocol
- IMSI: International Mobile Subscriber Identity
- IP: Internet Protocol
- IPTV: Internet Protocol Television
- ISDN: Integrated Services Digital Network
- MAC: Media Access Control
- MBMS: Multimedia Broadcast Multicast Service
- MPEG: Moving Picture Experts Group
- MSISDN: Mobile Subscriber ISDN Number
- OMA: Open Mobile Alliance
- PC: Personal Computer
- PIN: Persönliche Identifikationsnummer
- PVR: Personal Video Recorder
- RTP: Real-Time Transport Protocol
- RTSP: Real-Time Streaming Protocol
- SDTV: Standard Definition Television
- SMS: Short Messaging Service
- STB: Set Top Box
- TCP: Transmission Control Protocol
- TV: Television, Fernsehen, Fernsehgerät
- UDP: User Datagram Protocol
- UMTS: Universal Mobile Telecommunications System
- VoD: Video on Demand
- XML: Extensible Markup Language

## Patentansprüche

1. Verfahren zum berechtigungsabhängigen Zugriff auf Multimediainhalte,
- bei dem durch ein erstes Endgerät (G1) eine erste Anforderung eines Multimediainhalts (C) für eine Ausgabe des Multimediainhalts (C) über das erste Endgerät (G1) bereitgestellt wird (101);
- bei dem anhand einer ersten Berechtigungsinformation überprüft wird, dass die Ausgabe des Multimediainhalts (C) berechtigt ist (102);
- bei dem durch das erste Endgerät (G1) eine zweite Anforderung bereitgestellt wird für eine Ausgabe des Multimediainhalts (C) über ein zweites Endgerät (103);
- bei dem überprüft wird, ob ein erster Sicherheitshinweis über das erste Endgerät (G1) auszugeben ist (104);
- bei dem die Ausgabe des Multimediainhalts (C) über das zweite Endgerät (G2) erfolgt (106), falls der erste Sicherheitshinweis nicht auszugeben ist oder eine Eingabe einer bestätigenden Quittung für den ersten Sicherheitshinweis durch das erste Endgerät (G1) erkannt wird (105).

2. Verfahren nach Anspruch 1,
- bei dem die erste Berechtigungsinformation eine Master-Berechtigungsinformation ist oder eine Eingabe einer weiteren Berechtigungsinformation durch das erste Endgerät (G1) erkannt wird, wobei die weitere Berechtigungsinformation eine Master-Berechtigungsinformation ist

3. Verfahren nach Anspruch 1 oder 2,
- bei dem eine Ausgabe einer zweiten Statusinformation über das erste Endgerät (G1) erfolgt, wobei die zweite Statusinformation das zweite Endgerät (G2) betrifft.

4. Verfahren nach einem der vorhergehenden Ansprüche,
- bei dem eine weitere Anforderung durch das erste Endgerät (G1) gestellt wird für eine Aktualisierung von mit einer dritten Berechtigungsinformation verknüpften Rechten und/oder der dritten Berechtigungsinformation, wobei die dritte Berechtigungsinformation zur Ausgabe eines zweiten weiteren Multimediainhalts über das zweite Endgerät (G2) berechtigt.

5. Verfahren nach einem der vorhergehenden Ansprüche,
- bei dem die Ausgabe des Multimediainhalts (C) über das erste Endgerät (G1) unmittelbar erfolgt oder die Ausgabe des Multimediainhalts (C) vorgemerkt wird.

6. Verfahren nach einem der vorhergehenden Ansprüche, wobei ein zweiter Sicherheitshinweis über das zweite Endgerät (G2) ausgegeben wird, falls das zweite Endgerät (G2) zum Zeitpunkt des Beginns der Ausgabe des Multimediainhalts (C) über das zweite Endgerät (G2) in Betrieb ist.

7. Verfahren nach einem der vorhergehenden Ansprüche, wobei die Ausgabe des Multimediainhalts (C) über das zweite Endgerät (G2) unmittelbar mit Verfügbarkeit des Multimediainhalts (C) oder für einen vorbestimmten Zeitpunkt angefordert wird.

8. Verfahren nach einem der vorhergehenden Ansprüche, wobei das zweite Endgerät (G2) in einen aktiven Betriebszustand geschaltet wird, falls es sich vor dem Zeitpunkt des Beginns der Ausgabe des Multimediainhalts (C) über das zweite Endgerät (G2) in einem nicht aktiven Betriebszustand befindet.

9. Verfahren nach einem der vorhergehenden Ansprüche, wobei der Multimediainhalt (C) über das erste Endgerät (G1) weiter ausgegeben wird nach dem Zeitpunkt des Beginns der Ausgabe des Multimediainhalts (C) über das zweite Endgerät (G2).

10. Verfahren nach einem der vorhergehenden Ansprüche,
- bei dem das erste Endgerät (G1) und das zweite Endgerät (G2) einander zugeordnet werden.

11. Verfahren nach einem der vorhergehenden Ansprüche, wobei das erste Endgerät (G1) einem ersten Dienstanbieternetz zugeordnet ist und mit Hilfe einer ersten Identifikationsinformation identifiziert wird, wobei das zweite Endgerät (G2) einem zweiten Dienstanbieternetz zugeordnet ist und mit Hilfe einer zweiten Identifikationsinformation identifiziert wird, und
wobei das erste Endgerät (G1) und das zweite Endgerät (G2) einander zugeordnet werden durch Zuordnung der zweiten Identifikationsinformation zu dem ersten Endgerät (G1).

12. Verfahren nach einem der vorhergehenden Ansprüche,
- bei dem der erste Sicherheitshinweis über das erste Endgerät (G1) ausgegeben wird, falls nicht eine Eingabe einer zweiten Berechtigungsinformation durch das zweite Endgerät (G2) erkannt wurde, wobei die zweite Berechtigungsinformation zur Ausgabe des Multimediainhalts (C) berechtigt.

13. Verfahren nach einem der vorhergehenden Ansprüche,
- bei dem mindestens ein Berechtigungsteuerungsserver (PCI; PCI1, PCI2) vorgesehen wird, über welchen eine Kommunikation zwischen dem ersten Endgerät (G1) und dem zweiten Endgerät (G2) geführt wird.

14. Vorrichtung zum berechtigungsabhängigen Zugriff auf Multimediainhalte umfassend eine Prozessoreinheit und/oder eine zumindest teilweise fest verdrahtete Schaltungsanordnung, die derart eingerichtet ist, dass das Verfahren nach einem der vorhergehenden Ansprüchen durchführbar ist.

15. System, insbesondere Kommunikationssystem, umfassend die Vorrichtung gemäß Anspruch 14.

## Claims

1. A method for authorization-dependent access to multimedia contents,
- in which a first terminal (G1) produces (101) a first request for a multimedia content (C) for an output of the multimedia content (C) via the first terminal (G1);
- in which a first authorization information item is used to check that the output of the multimedia content (C) is authorized (102);
- in which the first terminal (G1) produces a second request for an output of the multimedia content (C) via a second terminal (103);
- in which a check is carried out to determine whether to output (104) a first security note via the first terminal (G1);
- in which the output of the multimedia content (C) takes place (106) via the second terminal (G2) if the first security note is not to be output, or an input of a confirming acknowledgement for the first security note is identified (105) by the first terminal (G1).

2. The method as claimed in claim 1,
- in which the first authorization information item is a master authorization information item or an input of a further authorization information item is identified by the first terminal (G1), wherein the further authorization information item is a master authorization information item.

3. The method as claimed in claim 1 or 2,
- in which a second status information item is output via the first terminal (G1), wherein the second status information item relates to the second terminal (G2).

4. The method as claimed in one of the preceding claims,
- in which a further request is made by the first terminal (G1) for updating of rights linked to a third authorization information item and/or of the third authorization information item, wherein the third authorization information item authorizes the output of a second further multimedia content via the second terminal (G2).

5. The method as claimed in one of the preceding claims,
- in which the multimedia content (C) is output immediately via the first terminal (G1), or the output of the multimedia content (C) is booked.

6. The method as claimed in one of the preceding claims, wherein a second security note is output via the second terminal (G2) if the second terminal (G2) is in operation at the point in time of the start of the output of the multimedia content (C) via the second terminal (G2).

7. The method as claimed in one of the preceding claims,
wherein the output of the multimedia content (C) via the second terminal (G2) is requested immediately with availability of the multimedia content (C) or for a predetermined point in time.

8. The method as claimed in one of the preceding claims,
wherein the second terminal (G2) is switched to an active operating state if it is in an inactive operating state before the point in time of the start of the output of the multimedia content (C) via the second terminal (G2).

9. The method as claimed in one of the preceding claims,
wherein the multimedia content (C) is still output via the first terminal (G1) after the point in time of the start of the output of the multimedia content (C) via the second terminal (G2).

10. The method as claimed in one of the preceding claims,
- in which the first terminal (G1) and the second terminal (G2) are associated with one another.

11. The method as claimed in one of the preceding claims,
wherein the first terminal (G1) is associated with a first service provider network and is identified with the aid of a first identification information item,
wherein the second terminal (G2) is associated with a second service provider network and is identified with the aid of a second identification information item, and
wherein the first terminal (G1) and the second terminal (G2) are associated with one another by association of the second identification information item with the first terminal (G1).

12. The method as claimed in one of the preceding claims,
- in which the first security note is output via the first terminal (G1) if no input of a second authorization information item has been identified by the second terminal (G2), wherein the second authorization information item authorizes the output of the multimedia content (C).

13. The method as claimed in one of the preceding claims,
- in which at least one authorization control server (PCI; PCIL, PCI2) is provided, via which communication is passed between the first terminal (G1) and the second terminal (G2).

14. An apparatus for authorization-dependent access to multimedia contents, having a processor unit and/or an at least partially hard-wired circuit arrangement, which is designed such that the method as claimed in one of the preceding claims can be carried out.

15. A system, in particular a communication system, having the apparatus as claimed in claim 14.

## Revendications

1. Procédé d'accès à des contenus multimédias en fonction d'une autorisation, dans lequel :
- une première requête de contenu multimédia (C) est fournie par un premier terminal (G1) pour production en sortie du contenu multimédia (C) via le premier terminal (G1) (101) ;
- il est vérifié, à l'aide d'une première information d'autorisation, que la production en sortie du contenu multimédia (C) est autorisée (102) ;
- une deuxième requête est fournie par le premier terminal (G1) pour production en sortie du contenu multimédia (C) via un deuxième terminal (103) ;
- il est vérifié s'il y a lieu de produire en sortie une première indication de sécurité via le premier terminal (G1) (104) ;
- la production en sortie du contenu multimédia (C) s'effectue via le deuxième terminal (G2) (106) s'il n'y a pas lieu de produire en sortie la première indication de sécurité ou s'il y a reconnaissance, par le premier terminal (G1), d'une saisie d'un acquittement de confirmation pour la première indication de sécurité (105).

2. Procédé selon la revendication 1, dans lequel la première information d'autorisation est une information d'autorisation maître, ou une saisie d'une autre information d'autorisation est reconnue par le premier terminal (G1), l'autre information d'autorisation étant une information d'autorisation maître.

3. Procédé selon la revendication 1 ou 2, dans lequel une production en sortie d'une deuxième information de statut s'effectue via le premier terminal (G1), la deuxième information de statut concernant le deuxième terminal (G2).

4. Procédé selon l'une des revendications précédentes, dans lequel une autre requête est faite par le premier terminal (G1) pour une actualisation de droits attachés à une troisième information d'autorisation et/ou de la troisième information d'autorisation, la troisième information d'autorisation autorisant à produire en sortie un deuxième autre contenu multimédia via le deuxième terminal (G2).

5. Procédé selon l'une des revendications précédentes, dans lequel la production en sortie du contenu multimédia (C) via le premier terminal (G1) s'effectue directement ou il est pris note de la production en sortie du contenu multimédia (C).

6. Procédé selon l'une des revendications précédentes, une deuxième indication de sécurité étant produite en sortie via le deuxième terminal (G2) si le deuxième terminal (G2) est en service au moment du début de la production en sortie du contenu multimédia (C) via le deuxième terminal (G2).

7. Procédé selon l'une des revendications précédentes, la production en sortie du contenu multimédia (C) via le deuxième terminal (G2) étant demandée directement avec disponibilité du contenu multimédia (C) ou pour un instant prédéterminé.

8. Procédé selon l'une des revendications précédentes, le deuxième terminal (G2) étant commuté dans un état de fonctionnement actif s'il se trouve dans un état de fonctionnement non actif avant l'instant du début de la production en sortie du contenu multimédia (C) via le deuxième terminal (G2).

9. Procédé selon l'une des revendications précédentes, le contenu multimédia (C) étant de nouveau produit en sortie via le premier terminal (G1) après l'instant du début de la production en sortie du contenu multimédia (C) via le deuxième terminal (G2).

10. Procédé selon l'une des revendications précédentes, dans lequel le premier terminal (G1) et le deuxième terminal (G2) sont associés l'un à l'autre.

11. Procédé selon l'une des revendications précédentes, le premier terminal (G1) étant associé à un premier réseau de fournisseur de services et étant identifié à l'aide d'une première information d'identification, le deuxième terminal (G2) étant associé à un deuxième réseau de fournisseur de services et étant identifié à l'aide d'une deuxième information d'identification, le premier terminal (G1) et le deuxième terminal (G2) étant associés l'un à l'autre par association de la deuxième information d'identification au premier terminal (G1)

12. Procédé selon l'une des revendications précédentes, dans lequel la première indication de sécurité est produite en sortie via le premier terminal (G1) s'il n'y a pas eu reconnaissance, par le deuxième appareil (G2), d'une saisie d'une deuxième information d'autorisation, la deuxième information d'autorisation autorisant à produire en sortie le contenu multimédia (C).

13. Procédé selon l'une des revendications précédentes, dans lequel est prévu au moins un serveur de commande d'autorisations (PCI ; PCI1, PCI2) par l'intermédiaire duquel s'effectue une communication entre le premier terminal (G1) et le deuxième terminal (G2).

14. Dispositif d'accès à des contenus multimédias en fonction d'une autorisation, comprenant une unité de processeur et/ou un circuit qui est au moins en partie à câblage fixe et qui est aménagé de manière telle qu'il est possible d'exécuter le procédé selon l'une des revendications précédentes.

15. Système, et plus particulièrement système de communication, comprenant le dispositif selon la revendication 14.
